(19) Europäisches Patentamt
European Patent Office
Office européen des brevets

(11) Veröffentlichungsnummer **0 042 357**
**B1**

(12) # EUROPÄISCHE PATENTSCHRIFT

(45) Veröffentlichungstag der Patentschrift: **06.06.84**

(51) Int. Cl.³: **C 09 B 29/01,** C 09 B 29/085, C 09 B 29/40, D 06 P 3/24

(21) Anmeldenummer: **81810231.1**

(22) Anmeldetag: **09.06.81**

(54) **Azofarbstoffe, deren Herstellung und Verwendung.**

(30) Priorität: **13.06.80 CH 4571/80**

(43) Veröffentlichungstag der Anmeldung: **23.12.81 Patentblatt 81/51**

(45) Bekanntmachung des Hinweises auf die Patenterteilung: **06.06.84 Patentblatt 84/23**

(84) Benannte Vertragsstaaten: **BE CH DE FR GB LI**

(56) Entgegenhaltungen:
**FR - A - 838 068**
**GB - A - 2 021 619**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Mäusezahl, Dieter, Dr., Langgartenstrasse 19, CH-4105 Biel-Benken (CH)**
Erfinder: **Hurter, Rudolf, Laufenburgerstrasse 10/3, CH-4058 Basel (CH)**
Erfinder: **Schwander, Hansrudolf, Dr., Unterm Schellenberg 189, CH-4125 Riehen (CH)**

**EP 0 042 357 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die der vorliegenden Erfindung zugrunde liegende Aufgabe war es, neue Azofarbstoffe zu finden, die zum Färben von natürlichen und synthetischen Polyamiden aus wäßrigem Bad geeignet sind, die ferner Nuancen im Bereich Gelb bis Rot haben, und die außerdem verbesserte Echtheitseigenschaften, insbesondere in den Licht- und Naßechtheiten, aufweisen, und die zudem besonders für Kombinationsfärbungen geeignet sind.

Es wurde gefunden, daß die Azofarbstoffe der Formel (1) den genannten Anforderungen genügen.

Gegenstand der vorliegenden Erfindung sind somit Monoazofarbstoffe der Formel

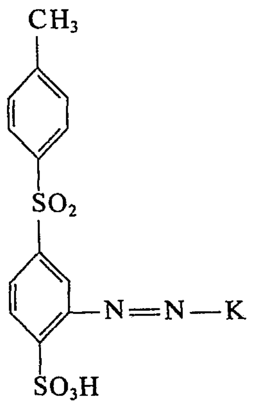

(1)

worin K einen Rest der Formel

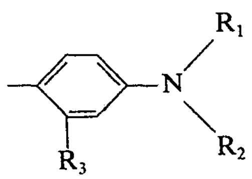

(2)

oder der Formel

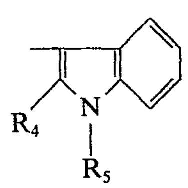

(3)

bedeutet, worin $R_1$ und $R_2$ unabhängig voneinander Wasserstoff, $C_{1-4}$-Alkyl, das durch Halogen, Cyan, Hydroxy, Carboxy, Sulfo, Sulfato, $C_{1-4}$-Alkoxy, $C_{1-4}$-Alkoxycarbonyl, $C_{1-4}$-Alkanoyloxy, Phenyl, Sulfophenyl und Naphthyl substituiert sein kann, Cyclohexyl, Phenyl, $C_{1-4}$-Alkenyl, das durch Halogen substituiert sein kann oder Naphthyl ist, oder worin $R_1$ und $R_2$ zusammen mit dem sie verbindenden Stickstoffatom, gegebenenfalls unter Einschluß eines weiteren Heteroatomes, einen heterocyclischen 5- oder 6-Ring bilden, $R_3$ Wasserstoff, $C_{1-4}$-Alkyl, $C_{1-4}$-Alkoxy, das durch Hydroxy und $C_{1-4}$-Alkoxy substituiert sein kann, $C_{1-4}$-Alkanoylamino, Benzoylamino, das im Benzolkern durch Methyl, Äthyl, Methoxy, Äthoxy, Chlor, Carboxy und Sulfo substituiert sein kann, Ureido, $C_{1-4}$-Alkylsulfonylamino, Phenylsulfonylamino, das im Benzolkern durch Methyl, Äthyl, Methoxy, Äthoxy, Chlor, Carboxy und Sulfo substituiert sein kann, oder Naphthylsulfonylamino, $R_4$ Methyl oder Phenyl und $R_5$ Wasserstoff oder $C_{1-4}$-Alkyl ist, wobei falls K der Rest der Formel (2) ist, $R_3$ nicht Wasserstoff sein darf, wenn $R_1$ oder $R_2$ Benzyl ist.

In der oben angegebenen Definition für $R_1$, $R_2$ und $R_3$ sind unter Alkyl-, Alkoxy- und Alkanoylgruppen geradkettige oder verzweigtkettige Reste zu verstehen, die gegebenenfalls in der angegebenen Weise substituiert sein können.

Beispiele für Substituenten $R_1$ und $R_2$ sind Methyl, Äthyl, Propyl, Isopropyl, Butyl, Isobutyl, sek.-Butyl, tert.-Butyl, Chlormethyl, β-Chloräthyl, β-Bromäthyl, β-Cyanäthyl, β-Hydroxyäthyl, β- oder γ-Hydroxypropyl, β-Carboxyäthyl, γ-Carboxypropyl, β-Sulfoäthyl, γ-Sulfopropyl, δ-Sulfo-n-butyl, β-Methyl-γ-sulfopropyl, β-Sulfatoäthyl, β-Methoxyäthyl, β-Äthoxyäthyl, β-Methoxycarbonyläthyl, β-Acetyloxyäthyl, Benzyl, Phenäthyl, Napth-(1)-äthyl, Cyclohexyl, β-Hydroxy-γ-sulfopropyl, β-Hydroxybutyl, β-Hydroxy-γ-methoxypropyl, β-Propionyloxyäthyl, Propenyl, γ-Chlorpropenyl und Sulfobenzyl. Enthalten $R_1$ und $R_2$ einen Phenyl- oder Naphthylrest, so kann dieser die in Azofarbstoffen üblichen Ringsubstituenten enthalten. Als solche Substituenten, im speziellen am Phenylrest, seien beispielsweise Sulfo, Halogen, wie Fluor, Chlor oder Brom, Nitro, $C_{1-4}$-Alkylgruppen, wie Methyl, oder $C_{1-4}$-Alkoxygruppen, wie Methoxy und Äthoxy genannt.

Bilden $R_1$ und $R_2$ zusammen mit dem sie verbindenden Stickstoffatom gegebenenfalls unter Einschluß eines weiteren Heteroatoms den Rest eines 5- oder 6gliedrigen Heterorings, so handelt es sich hierbei besonders um die Pyrrolidino-, Piperidino- oder Morpholinogruppe.

Beispiele für den Substituenten $R_3$ sind Methyl, Äthyl, Propyl, Isopropyl, Butyl, Isobutyl, sek.-Butyl, tert.-Butyl, Methoxy, Äthoxy, Propyloxy, Isopropyloxy, Butyloxy, Isobutyloxy, sek.-Butyloxy, tert.-Butyloxy, $\beta$-Hydroxyäthoxy, $\beta$-Hydroxy-n-propyloxy, $\beta$-Hydroxy-n-butyloxy, $\beta$-Äthoxyäthoxy, $\beta$-Hydroxy-$\gamma$-methoxypropyloxy, Acetylamino, Propionylamino, Benzoylamino, 4'-Chlorbenzoylamino, Ureido, Methylsulfonylamino, Phenylsulfonylamino, 4'-Methylphenylsulfonylamino, 1-Naphthylsulfonylamino, 4'-Methylbenzoylamino und 2'-Carboxybenzoylamino.

$R_4$ ist Methyl oder die unsubstituierte Phenylgruppe.

Beispiele für den Substituenten $R_5$ sind Methyl, Äthyl, Propyl, Isopropyl, Butyl, Isobutyl, sek.-Butyl, tert.-Butyl, Pentyl, Hexyl, Heptyl und Octyl.

Bevorzugt sind Monoazofarbstoffe der Formel (1), worin K den Rest der Formel (2) bedeutet, worin $R_1$ und $R_2$ unabhängig voneinander Wasserstoff, $C_{1-4}$-Alkyl, das durch Cyan, Hydroxy, Sulfo, Sulfato, $C_{1-4}$-Alkoxy, $C_{1-4}$-Alkoxycarbonyl, $C_{1-4}$-Alkanoyloxy, Phenyl oder Sulfophenyl substituiert sein kann, Cyclohexyl oder $C_{1-4}$-Alkenyl, das durch Halogen substituiert sein kann, ist, oder worin $R_1$ und $R_2$ zusammen mit dem sie verbindenden Stickstoffatom einen Morpholinring bilden, $R_3$ Wasserstoff, $C_{1-4}$-Alkyl, $C_{1-4}$-Alkoxy, das durch Hydroxy und $C_{1-4}$-Alkoxy substituiert sein kann, $C_{1-4}$-Alkanoylamino, Benzoylamino, das im Benzolkern durch Methyl, Chlor und Carboxy substituiert sein kann, Ureido, $C_{1-4}$-Alkylsulfonylamino oder Phenylsulfonylamino, das im Benzolkern durch Methyl substituiert sein kann, ist, wobei $R_3$ nicht Wasserstoff sein darf, wenn $R_1$ oder $R_2$ Benzyl ist.

Bevorzugt sind ferner Monoazofarbstoffe der Formel (1), worin K den Rest der Formel (3) bedeutet, worin $R_4$ Methyl oder Phenyl und $R_5$ Wasserstoff, Methyl oder Octyl ist.

Bevorzugt sind insbesondere Monoazofarbstoffe der Formel (1), worin K einen Rest der Formel (2) bedeutet, worin $R_1$ und $R_2$ unabhängig voneinander Wasserstoff, Methyl, Äthyl, $\beta$-Hydroxyäthyl, $\beta$-Cyanäthyl, $\beta$-Sulfoäthyl, $\beta$-Sulfatoäthyl, $\gamma$-Sulfopropyl, $\beta$-Hydroxy-$\gamma$-sulfopropyl, Propenyl, $\gamma$-Chlorpropenyl, $\beta$-Hydroxybutyl, $\beta$-Hydroxy-$\gamma$-methoxypropyl, $\beta$-Acetoxyäthyl, $\beta$-Methoxycarbonyläthyl, $\beta$-Propionyloxyäthyl, Cyclohexyl, Benzyl oder Sulfobenzyl ist, oder worin $R_1$ und $R_2$ zusammen mit dem sie verbindenden Stickstoffatom einen Morpholinring bilden und $R_3$ Methyl, Äthyl, Methoxy, Äthoxy, $\beta$-Hydroxyäthoxy, $\beta$-Hydroxypropyloxy, $\beta$-Hydroxy-$\gamma$-methoxypropyloxy, $\beta$-Hydroxybutyloxy, Acetylamino, Propionylamino, Benzoylamino, Methylbenzoylamino, Chlorbenzoylamino, Carboxybenzoylamino, Methylsulfonylamino, Phenylsulfonylamino, Methylphenylsulfonylamino oder Ureido ist.

Wertvolle Vertreter der oben definierten Klassen sind die Monoazofarbstoffe der Formeln

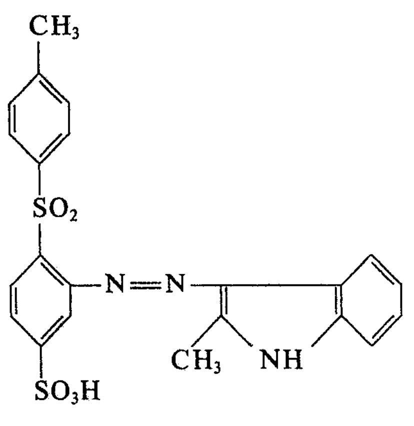

(4)

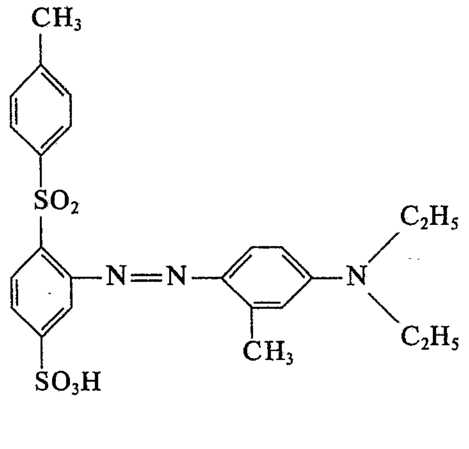

(5)

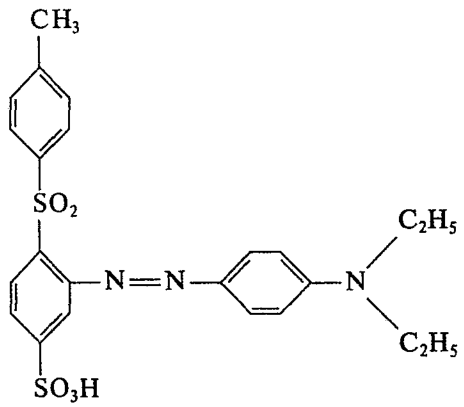

(5a)

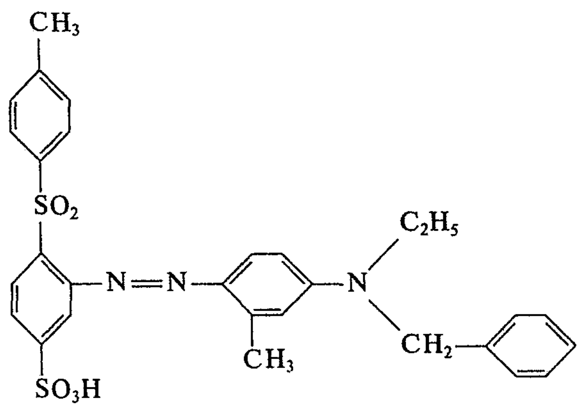

(6)

und

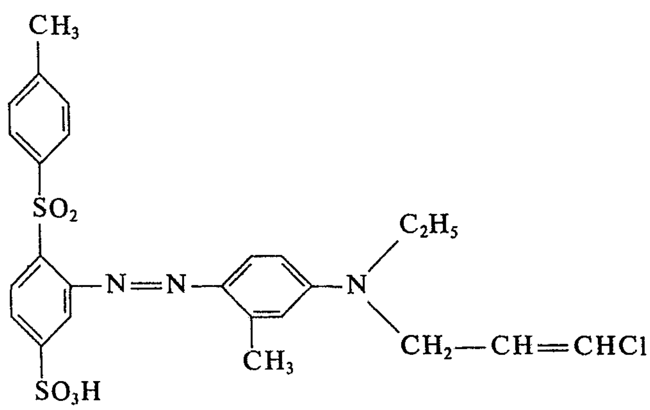

(6a)

Gegenstand der Erfindung ist ferner ein Verfahren zur Herstellung der Monoazofarbstoffe der Formel (1). Das Verfahren ist dadurch gekennzeichnet, daß man eine Diazokomponente der Formel

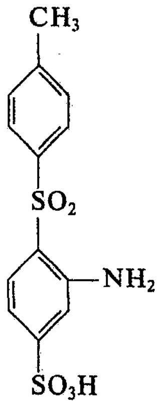

(7)

diazotiert und auf eine Kupplungskomponente der Formel

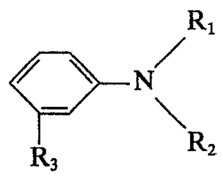

(8)

oder der Formel

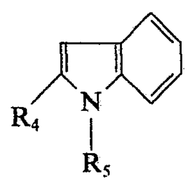

(9)

worin $R_1$, $R_2$, $R_3$, $R_4$ und $R_5$ die unter Formel (1) angegebenen Bedeutungen haben, kuppelt.

Die Diazotierung der Diazokomponenten der Formel (7) erfolgt in der Regel durch Einwirkung salpetriger Säure in wäßrig-mineralsaurer Lösung bei tiefer Temperatur, die Kupplung auf die Kupplungskomponenten der Formel (8) bzw. (9) bei sauren, neutralen bis alkalischen pH-Werten.

Vorzugsweise verwendet man Kupplungskomponenten der Formel (8), worin $R_1$ und $R_2$ unabhängig voneinander Wasserstoff, $C_{1-4}$-Alkyl, das durch Cyan, Hydroxy, Sulfo, Sulfato, $C_{1-4}$-Alkoxy, $C_{1-4}$-Alkoxycarbonyl, $C_{1-4}$-Alkanoyloxy, Phenyl oder Sulfophenyl substituiert sein kann, Cyclohexyl oder $C_{1-4}$-Alkenyl, das durch Halogen substituiert sein kann, ist, oder worin $R_1$ und $R_2$ zusammen mit dem sie verbindenden Stickstoffatom einen Morpholinring bilden, $R_3$ Wasserstoff, $C_{1-4}$-Alkyl, $C_{1-4}$-Alkoxy, das durch Hydroxy und $C_{1-4}$-Alkoxy substituiert sein kann, $C_{1-4}$-Alkanoylamino, Benzoylamino, das im Benzolkern durch Methyl, Chlor und Carboxy substituiert sein kann, Ureido, $C_{1-4}$-Alkylsulfonylamino oder Phenylsulfonylamino, das im Benzolkern durch Methyl substituiert sein kann, ist, wobei $R_3$ nicht Wasserstoff sein darf, wenn $R_1$ oder $R_2$ Benzyl ist.

Vorzugsweise verwendet man ebenfalls Kupplungskomponenten der Formel (9), worin $R_4$ Methyl oder Phenyl und $R_5$ Wasserstoff, Methyl oder Octyl ist.

Insbesondere verwendet man Kupplungskomponenten der Formel (8), worin $R_1$ und $R_2$ unabhängig voneinander Wasserstoff, Methyl, Äthyl, $\beta$-Hydroxyäthyl, $\beta$-Cyanäthyl, $\beta$-Sulfoäthyl, $\beta$-Sulfatoäthyl, $\gamma$-Sulfopropyl, $\beta$-Hydroxy-$\gamma$-sulfopropyl, Propenyl, $\gamma$-Chlorpropenyl, $\beta$-Hydroxybutyl, $\beta$-Hydroxy-$\gamma$-methoxypropyl, $\beta$-Acetoxyäthyl, $\beta$-Methoxycarbonyläthyl, $\beta$-Propionyloxyäthyl, Cyclohexyl, Benzyl oder Sulfobenzyl ist, oder worin $R_1$ und $R_2$ zusammen mit dem sie verbindenden Stickstoffatom einen Morpholinring bilden und $R_3$ Methyl, Äthyl, Methoxy, Äthoxy, $\beta$-Hydroxyäthoxy, $\beta$-Hydroxypropyloxy, $\beta$-Hydroxy-$\gamma$-methoxypropyloxy, $\beta$-Hydroxybutyloxy, Acetylamino, Propionylamino, Benzoylamino, Methylbenzoylamino, Chlorbenzoylamino, Carboxybenzoylamino, Methylsulfonylamino, Phenylsulfonylamino, Methylphenylsulfonylamino oder Ureido ist.

Der Monoazofarbstoff der Formel (4) wird hergestellt, indem man 2-Amino-4'-methyl-diphenylsulfon-4-sulfonsäure diazotiert und auf 2-Methylindol kuppelt.

Die Herstellung des Monoazofarbstoffes der Formel (5) ist dadurch gekennzeichnet, daß man 2-Amino-4'-methyl-diphenylsulfon-4-sulfonsäure diazotiert und auf N,N-Diäthyl-m-toluidin kuppelt.

Die Herstellung des Monoazofarbstoffes der Formel (5a) ist dadurch gekennzeichnet, daß man 2-Amino-4'-methyl-diphenylsulfon-4-sulfonsäure diazotiert und auf N,N-Diäthylanilin kuppelt.

Die Herstellung des Monoazofarbstoffes der Formel (6) ist dadurch gekennzeichnet, daß man 2-Amino-4'-methyl-diphenylsulfon-4-sulfonsäure diazotiert und auf N-Äthyl-N-benzyl-m-toluidin kuppelt.

Und die Herstellung des Monoazofarbstoffes der Formel (6a) ist dadurch gekennzeichnet, daß man 2-Amino-4'-methyl-diphenylsulfon-4-sulfonsäure diazotiert und auf N-Äthyl-N-$\gamma$-chlorpropenyl-3-methylanilin kuppelt.

Die Diazokomponente der Formel (7) ist bekannt und wird nach bekannten Methoden hergestellt.

Aus der großen Zahl möglicher Kupplungskomponenten seien folgende als Beispiele genannt:

Anilin, Dimethylanilin, Diäthylanilin, 3-Methyl-dimethylanilin, 3-Methyl-diäthylanilin, 3-Acetylamino- oder 3-Methoxycarbonylamino- oder 3-Ureido-dimethylanilin, 3-Methoxydiäthylanilin, 3-Methoxyanilin, N-Äthyl-N-($\beta$-cyanäthyl)-anilin, N-Äthyl-N-($\beta$-hydroxyäthyl)-anilin, N-Äthyl-N-($\beta$-acetoxyäthyl)-anilin, N,N-Dibutylanilin, 3-Acetylamino-N,N-diäthylanilin, N-Methyl-N-($\beta$-cyanäthyl)-anilin, 3-Methyl-N,N-di-($\beta$-cyanäthyl)-anilin, 3-Äthyl-N,N-dimethylanilin, 3-Methyl-N-äthyl-N-benzylanilin, N,N-Di-n-propylanilin, 3-Acetylamino-N,N-di-($\beta$-hydroxyäthyl)-anilin, 3-Methyl-N,N-di-($\beta$-acetoxyäthyl)-anilin, N-Äthyl-N-($\beta$-chloräthyl)-anilin, 3-Acetylamino-N-benzylanilin, 3-Acetylamino-N-($\beta$-acetoxyäthyl-N-benzylanilin, 3-Methyl-N-äthyl-N-($\beta$-cyanäthyl)-anilin, 3-Propionylamin-N,N-dimethylanilin, 3-Benzoylamino-N,N-dimethylanilin, 3-Acetylamino-N-($\gamma$-phenoxy-$\beta$-hydroxy-n-propyl)-anilin, 3-Ureido-anilin, N-Äthyl-N-(3'-sulfobenzyl)-anilin, 3-Methyl-N-äthyl-N-($\beta$-sulfoäthyl)-anilin, 3-Benzoylamino-N,N-diäthylanilin, 3-Methyl-N,N-di-($\beta$-hydroxyäthyl)-anilin, 3-Methyl-N-Methyl-N-benzylanilin, 3-Propionylamino-N,N-diäthylanilin, 3-(4'-Chlorbenzoylamino)-N,N-diäthylanilin, 3-Acetylamino-N-äthyl-N-benzylanilin, 3-(4'-Methylphenylsulfonylamino)-N,N-diäthylanilin, 3-Methyl-N-äthyl-N-benzylanilin, 3-Methoxy-N,N-dimethylanilin, 3-Methyl-N-äthyl-N-$\gamma$-chlorpropenylanilin, 3-Methyl-N-cyclohexylanilin, 3-Methyl-N-methyl-N-cyclohexylanilin, 3-Methyl-N-äthyl-N-propenylanilin, 3-Methyl-N,N-dipropenylanilin, 3-Äthyl-N,N-dipropenylanilin, 3-Methyl-N-äthyl-N-($\beta$-hydroxybutyl)-anilin, 3-Methyl-N,N-di($\beta$-methoxycarbonyläthyl)-anilin, 3-Methyl-N,N-morpholinoanilin, 3-Methyl-N-äthyl-N-($\gamma$-sulfopropyl)-anilin, 3-Methyl-N-äthyl-N-($\beta$-hydroxy-$\gamma$-sulfopropyl)-anilin, 3-Methyl-N-äthyl-N-($\beta$-sulfatoäthyl)-anilin, 3-Methyl-N-äthyl-N-(3'-sulfobenzyl)-anilin, 3-Acetylamino-N-methyl-N-($\beta$-hydroxyäthyl)-anilin, 3-Acetylamino-N-methyl-N-($\beta$-cyanäthyl)-anilin, 3-Acetylamino-N,N-di($\beta$-cyanäthyl)-anilin, 3-Acetylamino-N-methyl-N-äthylcarbonyl-oxyäthylanilin, 3-Acetylamino-N-methyl-N-($\beta$-hydroxy-$\gamma$-methoxypropyl)-anilin, 3-Acetylamino-N,N-dipropenylanilin, 3-Acetylamino-N-cyclohexylanilin, 3-Propionylamino-N-cyclohexylanilin, 3-Propionylamino-N,N-dipropenylanilin, 3-(4'-Methylbenzoylamino)-N,N-diäthylanilin, 3-(2'-Carboxybenzoylamino)-N,N-diäthylanilin, 3-Methylsulfonylamino-N,N-diäthylanilin, 3-Methylsulfonylamino-N-äthyl-N-benzylanilin, 3-Phenylsulfonylamino-N,N-diäthylanilin, 3-Ureido-N,N-dipropenylanilin, 3-Ureido-N-äthyl-N-($\beta$-sulfoäthyl)-anilin, 3-Acetylamino-N-äthyl-N-($\beta$-hydroxy-$\gamma$-sulfopropyl)-anilin, 3-Acetylamino-N-äthyl-N-(3'-sulfobenzyl)-anilin, 3-Methoxy-N-äthyl-N-($\beta$-hydroxyäthyl)-anilin, 3-Methoxy-N,N-di($\beta$-cyanäthyl)-anilin, 3-Methoxy-N,N-dipropenylanilin, 3-Methoxy-N-cyclohexylanilin, 3-Methoxy-N-methyl-N-cyclohexylanilin, 3-Äthoxy-N,N-di-($\beta$-hydroxyäthyl)-anilin, 3-($\beta$-Hydroxyäthoxy)-N-äthyl-N-($\beta$-hydroxyäthyl)-anilin, 3-($\beta$-Hydroxyäthoxy)-N-äthyl-N-($\beta$-cyanäthyl)-anilin, 3-($\beta$-Hydroxyäthoxy)-N-äthyl-N-benzylanilin, 3-($\beta$-Hydroxypropyloxy)-N,N-di($\beta$-hydroxyäthyl)-anilin, 3-($\beta$-Hydroxypropyloxy)-N,N-dipropenylanilin, 3-Methoxy-N-äthyl-N-($\beta$-sulfoäthyl)-anilin, 3-Methoxy-N-äthyl-N-($\beta$-hydroxy-$\gamma$-sulfopropyl)-anilin, 3-Methoxy-N-äthyl-N-($\beta$-sulfatoäthyl)-anilin, 3-Methoxy-N-äthyl-N-(3'-sulfobenzyl)-anilin, 3-$\beta$-Hydroxyäthoxy-N,N-dimethylanilin, 3-$\beta$-Hydroxy-n-propyloxy-N,N-dimethylanilin, 3-$\beta$-Hydroxy-n-butyloxy-N,N-dimethylanilin, 3-$\beta$-Hydroxy-$\gamma$-methoxy-n-propyloxy-N,N-dimethylanilin, 3-Methoxy-N-methyl-N-benzylanilin, 3-Äthoxy-N,N-diäthylanilin, 2-Methylindol, 2-Phenylindol, 2-Methyl-N-methylindol und 2-Methyl-N-n-octylindol.

Die Farbstoffe der Formel (1) eignen sich zum Färben und Bedrucken von Amidgruppen enthaltenden Materialien, wie Textilfasern, Textilfäden und -geweben aus Wolle, Seide und Polyurethanfasern, insbesondere aber zum Färben und Bedrucken von synthetischem Polyamid, wobei die üblichen Färbeverfahren angewendet werden.

Sie zeichnen sich aus durch Brillanz und Farbstärke, Beständigkeit gegenüber Formaldehyd und allgemein gute Echtheiten, wie Lichtechtheit, Reibechtheit, Säure- und Alkaliechtheit, sowie je nach Art der Substitution der Kupplungskomponente, durch die Erzielung tiefer Nuancen, durch gute Naßechtheiten, insbesondere Wasch-, Wasser-, Heißwasser- und Schweißechtheit, oder durch gutes Migrieren, Decken der materialbedingten Streifigkeit und gutes Egalisierverhalten in Mischungen mit

anderen Farbstoffen für die Trichromiefärberei.

Ähnliche Farbstoffe wie die erfindungsgemäßen Farbstoffe werden in der britischen Patentanmeldung 20 21 619 beschrieben, die sich dadurch von den erfindungsgemäßen Farbstoffen unterscheiden, daß die Sulfonsäuregruppe in o-Stellung und die Sulfongruppe in p-Stellung zur Azobrücke an den Benzolkern gebunden ist. Demgegenüber zeigen die erfindungsgemäßen Farbstoffe eine bessere Nuancenkonstanz auf Polyamidmaterial bei unterschiedlichen Färbezeiten bei 100° C.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1

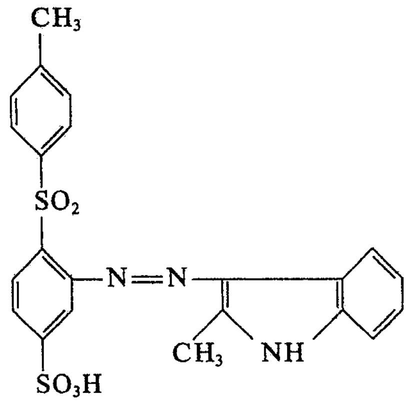

Es werden 52,8 g 2-Amino-4'-methyl-diphenylsulfon-4-sulfonsäure, feucht in 250 ml Wasser suspendiert. Dann werden 25 ml 10n Salzsäure zugegeben, und bei 10 bis 15° werden 25 ml 4n Nitritsäure zutropfen gelassen. Nach einer Stunde wird ein geringer Überschuß an Nitrit mit Sulfaminsäure zerstört. Nun werden 13,5 g 2-Methylindol bei 40° in 10 ml Salzsäure gelöst und unter gutem Rühren in die obige Diazosuspension eintropfen gelassen. Das Kupplungsgemisch wird 10 Stunden lang gerührt und durch Zugabe von kristallinem Natriumacetat wird ein pH-Wert von 4 eingestellt. Die gelbe Suspension wird filtriert, mit 200 ml 5%iger Kochsalzlösung gewaschen, und der Rückstand wird im Vakuum bei 60 bis 70° getrocknet. Man erhält 49,8 g trockenen Farbstoffes, der in Wasser bei pH = 7 sehr gut löslich ist.

Der Farbstoff gibt, aus schwach saurem Bade gefärbt, auf Polyamidmaterial brillante goldgelbe Färbungen mit sehr guter Lichtechtheit.

Wenn man im obigen Ansatz 2-Methylindol durch 2-Phenylindol ersetzt, so erhält man einen Farbstoff mit ähnlichen Eigenschaften, aber geringerer Wasserlöslichkeit.

Beispiel 2

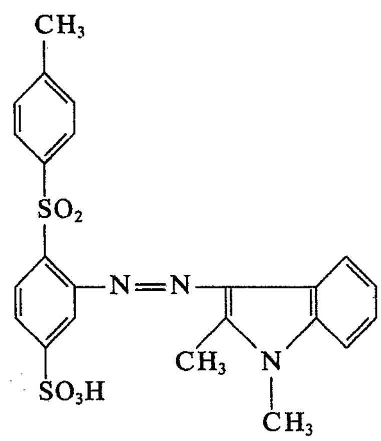

42 g des Farbstoffes gemäß Beispiel 1 werden in 62 g Methanphosphorsäuredimethylester suspendiert. Zu der Suspension werden 26,5 g wasserfreies Soda gegeben und das heterogene Gemisch während 5 Stunden bei 120 bis 125° gerührt. Die Alkylierung ist dann vollständig, wenn durch ein Dünnschichtchromatogramm kein Farbstoff gemäß Beispiel 1 mehr nachweisbar ist. Bei 95° werden

dem Reaktionsgemisch dann 100 ml Wasser von ca. 80° zugesetzt. Es bildet sich eine klare Lösung. Nach Zugabe von 20 g Kochsalz kristallisiert der Farbstoff aus. Man filtriert den Farbstoff ab, wäscht mit einer 10%igen Solelösung und trocknet den Farbstoff. Es werden 40,3 g gelbes Farbstoffpulver erhalten. Der Farbstoff gibt, aus schwach saurem Bade gefärbt, auf Polyamid brillante goldgelbe Färbungen mit sehr guter Lichtechtheit. Der Farbstoff zeichnet sich ferner durch gute Wasserlöslichkeit aus.

Beispiel 3

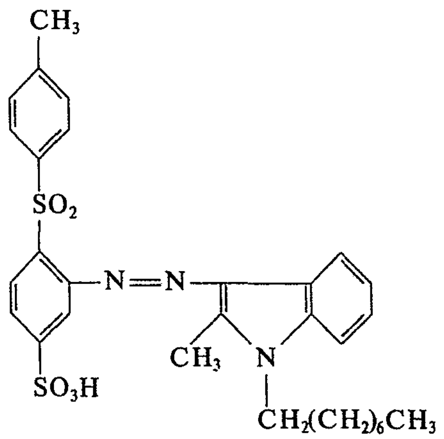

6,54 g 2-Amino-4'-methyl-diphenylsulfon-4-sulfonsäure werden in 150 ml Wasser bei 40—45° gelöst. Man fügt 5 ml 4N Natriumnitrit und 50 g Eis hinzu und versetzt die Mischung dann mit 11 ml einer ca. 31%igen Lösung von Naphthalin-1-sulfonsäure. Nach 15 Minuten wird ein geringer Nitritüberschuß mit Sulfaminsäure zerstört.

4,86 g 2-Methyl-N-octyl-indol werden in 6 ml 10 N Salzsäure und 2,5 ml Alkohol gelöst und der oben hergestellten Suspension des Diazoniumsalzes zugetropft. Nach 16 Stunden wird der völlig ausgefallene Farbstoff filtriert und mit 100 ml Wasser gewaschen. Das Nutschgut wird in 100 ml Wasser zu einer homogenen Masse verrührt und anschließend mit 2N Natronlauge auf konstant pH 7 gestellt. Der mit verdünnter Kochsalzlösung ausgefällte Farbstoff wird nach einiger Zeit kalt filtriert und im Vakuum bei 60—70° getrocknet.

Man erhält 8,93 g eines stark rotstichig gelben Farbpulvers.

Beispiel 4

Man löst 34,5 g 2-Amino-4'-methyl-diphenylsulfon-4-sulfosäure schwach brillantalkalisch bei 80° in 150 ml Wasser und gibt 14,62 ml 50%ige Natriumnitritlösung dazu. Man läßt diese Lösung zu einem Gemisch bestehend aus 210 ml Eis-Wasser und 26,5 g 37%iger Salzsäure zulaufen. Zur vollständigen Diazotierung rührt man das Gemisch noch während einer Stunde bei ca. 15°. Zu der so erhaltenen Diazosuspension gibt man hierauf eine ca. 50° warme Lösung bestehend aus 60 ml Isopropanol, welches 20,9 g der Kupplungskomponente der Formel

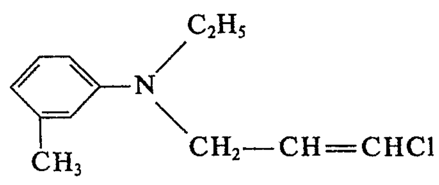

(dargestellt durch Umsetzung von N-Äthyl-m-toluidin mit 1,3-Dichlorpropen in Isopropanol in Gegenwart von Magnesiumoxyd) enthält, und 15 ml Wasser. Man rührt bei einer Temperatur von 20—25° bis zur Vervollständigung der Kupplung, worauf man erwärmt und durch Zugabe von Natronlauge den pH-Wert des Gemisches auf 7 stellt. Bei 70° gibt man 10 Vol.-% Kochsalz zu und läßt unter Rühren abkühlen, worauf das Natriumsalz des Farbstoffes der Formel

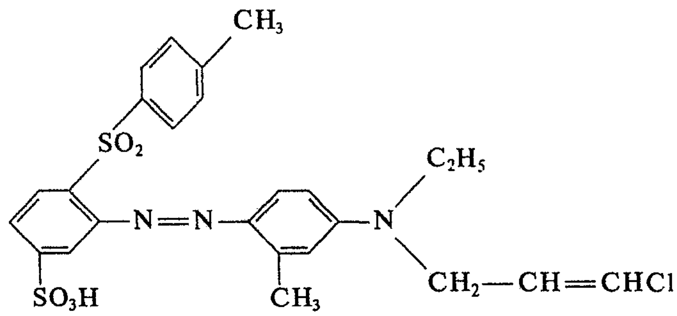

sich abscheidet. Man isoliert durch Filtration auf einer Nutsche bei Raumtemperatur und trocknet anschließend den Farbstoff bei 70° im Vakuum. Der Farbstoff bildet ein rotes Pulver, welches sich in Wasser mit orange-roter Farbe löst. Die mit diesem Farbstoff auf Polyamid erhältlichen orangen Färbungen besitzen gute Echtheitseigenschaften, insbesondere sind sie gut licht- und naßecht. Ferner zeigt der so erhaltene Farbstoff ein gutes Löslichkeitsverhalten.

Beispiel 5

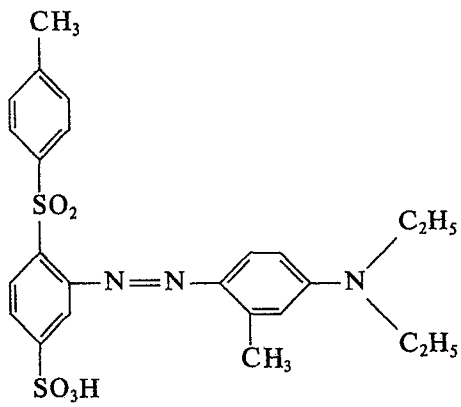

Es werden 42,0 g 2-Amino-4'-methyl-diphenylsulfon-4-sulfonsäure in 200 ml Wasser bei pH = 8,5 unter Erwärmen auf 60° gelöst, dann wird die Lösung auf 30° abgekühlt. Nun werden 12,5 ml 4N Nitritlösung zugegeben, und die so erhaltene Lösung wird auf eine Mischung von 200 g Eis und 15 ml 10N Salzsäure tropfen gelassen. Nach 30 Minuten wird ein geringer Nitritüberschuß mit Sulfaminsäure zerstört. Die entstandene Diazosuspension wird in eine Lösung von 8,3 g 3-Methyl-N,N-diäthylanilin in 100 ml 1N Salzsäure eingetragen, und das Kupplungsgemisch wird mit 103 ml 2N Natronlauge während 12 Stunden auf einem pH-Wert von 5 bis 6 gehalten. Der ausgefallene Farbstoff wird abfiltriert und mit 100 ml 2%iger Kochsalzlösung gewaschen. Nach dem Trocknen bei 60 bis 70° im Vakuum erhält man 28 g eines braunen Pulvers. Der Farbstoff gibt, aus schwach saurem Bade gefärbt, auf Polyamidmaterial eine brillante scharlachrote Färbung.

Wenn man wie im Beispiel 5 angegeben verfährt, jedoch eine Kupplungskomponente der Formel

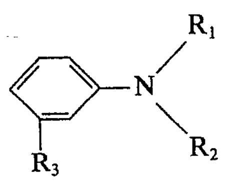

einsetzt, wobei $R_1$, $R_2$ und $R_3$ die in den Spalten 2 bis 4 der folgenden Tabelle 1 angegebenen Bedeutungen haben, so erhält man ebenfalls wertvolle wasserlösliche Farbstoffe, die Polyamid- oder Wollmaterial in den in der letzten Spalte angegebenen Tönen färben. Die Farbstoffe haben ein gutes Aufbauvermögen und gute Echtheitseigenschaften.

Tabelle 1

| Beispiel | $R_1$ | $R_2$ | $R_3$ | Farbton auf | |
|---|---|---|---|---|---|
| | | | | Polyamid | Wolle |
| 1 | $-CH_3$ | $-CH_3$ | $-CH_3$ | scharlach | |
| 2 | $-CH_2-CH_2-OH$ | $-CH_2-CH_2-OH$ | $-CH_3$ | scharlach | |
| 3 | $-C_2H_5$ | $-CH_2-CH_2-CN$ | $-CH_3$ | orange | |
| 4 | $-C_2H_5$ | $-CH_2-$ 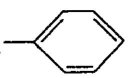 | $-CH_3$ | scharlach | |
| 5 | $-CH_3$ | desgl. | $-CH_3$ | scharlach | |
| 6 | $-H$ | 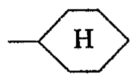 | $-CH_3$ | scharlach | |
| 7 | $-CH_3$ | desgl. | $-CH_3$ | scharlach | |
| 8 | $-C_2H_5$ | $-CH_2-CH=CH_2$ | $-CH_3$ | scharlach | |
| 9 | $-CH_2CH=CH_2$ | $-CH_2-CH=CH_2$ | $-CH_3$ | scharlach | |
| 10 | $-CH_2CH=CH_2$ | $-CH_2-CH=CH_2$ | $-C_2H_5$ | scharlach | |
| 11 | $-CH_2-CH_2-CN$ | $-CH_2-CH_2-CN$ | $-CH_3$ | orange | |
| 12 | $-C_2H_5$ | $-CH_2-CH(OH)-CH_2-CH_3$ | $-CH_3$ | scharlach | |
| 13 | $-CH_2-CH_2-C(=O)-O-CH_3$ | $-CH_2-CH_2-C(=O)-O-CH_3$ | $-CH_3$ | scharlach | |
| 14 | $-CH_2-CH_2-O-C(=O)-CH_3$ | $-CH_2-CH_2-O-C(=O)-CH_3$ | $-CH_3$ | scharlach | |
| 15 | 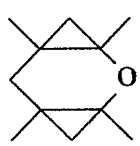 | | $-CH_3$ | scharlach | |
| 16 | $-C_2H_5$ | $-CH_2-CH_2-SO_3H$ | $-CH_3$ | | scharlach |
| 17 | $-C_2H_5$ | $-CH_2-CH_2-CH_2-SO_3H$ | $-CH_3$ | | scharlach |
| 18 | $-C_2H_5$ | $-CH_2-CH(OH)-CH_2-SO_3H$ | $-CH_3$ | | scharlach |
| 19 | $-C_2H_5$ | $-CH_2-CH_2-O-SO_3H$ | $-CH_3$ | | scharlach |
| 20 | $-C_2H_5$ | $-CH_2-$ 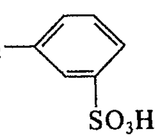 | $-CH_3$ | | scharlach |

Beispiel 6

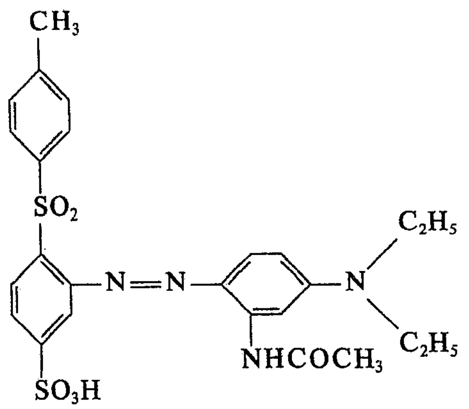

Es werden 8,16 g 2-Amino-4′-methyl-diphenylsulfon-4-sulfonsäure (80,1%ig) in 150 ml Wasser bei 45° neutral gelöst. Dann werden 5 ml 4N Nitritlösung und 50 g Eis zugegeben. In die Lösung werden 11 ml 4N $\alpha$-Naphthalinsulfonsäurelösung eingegossen, und das Gemisch wird 20 Minuten lang bei 18° gerührt. Ein geringer Nitritüberschuß wird mit Sulfaminsäure zerstört. Nun werden 4,12 g 3-Acetylamino-N,N-diäthylanilin in 100 ml Wasser mit 20 ml 1N Salzsäure bei 25° gelöst. Die entstandene Lösung wird im Laufe von 15 Minuten zur obigen Diazosuspension eintropfen gelassen. Der pH-Wert des Kupplungsgemisches wird mit 4N Natriumacetatlösung während 2 Stunden auf pH = 2,5 gehalten, dann ist die Kupplung beendet. Die entstandene Suspension wird mit Kochsalz versetzt und mit 10N Natronlauge auf pH = 9 eingestellt. Der Farbstoffniederschlag wird abfiltriert und mit 100 ml Wasser gewaschen. Nach Trocknen im Vakuum bei 70 bis 80° werden 9,7 g eines braunen Pulvers erhalten. Der Farbstoff gibt, aus schwach saurem Bade gefärbt, auf Polyamidmaterial brillante orange-rote Färbungen.

Wenn man wie im Beispiel 6 angegeben verfährt, jedoch eine Kupplungskomponente der Formel

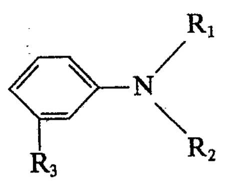

einsetzt, wobei $R_1$, $R_2$ und $R_3$ die in den Spalten 2 bis 4 der folgenden Tabelle 2 angegebenen Bedeutungen haben, so erhält man ebenfalls wertvolle wasserlösliche Farbstoffe, die Polyamid- oder Wollmaterial in den in der letzten Spalte angegebenen Tönen färben. Die Farbstoffe haben ein gutes Aufbauvermögen und gute Echtheitseigenschaften.

**Tabelle 2**

| Beispiel | $R_1$ | $R_2$ | $R_3$ | Farbton auf Polyamid | Farbton auf Wolle |
|---|---|---|---|---|---|
| 1 | $-CH_3$ | $-CH_3$ | $-NH-\underset{\underset{O}{\|}}{C}-CH_3$ | scharlach | |
| 2 | $-CH_3$ | $-CH_2-CH_2-OH$ | desgl. | scharlach | |
| 3 | $-CH_3$ | $-CH_2-CH_2-CN$ | desgl. | rotstichig orange | |
| 4 | $-CH_2-CH_2-CN$ | $-CH_2-CH_2-CN$ | desgl. | orange | |

Fortsetzung

| Beispiel | $R_1$ | $R_2$ | $R_3$ | Farbton auf Polyamid | Wolle |
|---|---|---|---|---|---|
| 5 | $-CH_3$ | 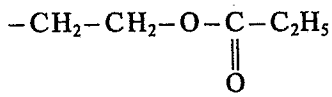 | 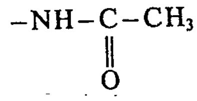 | scharlach | |
| 6 | $-CH_3$ | 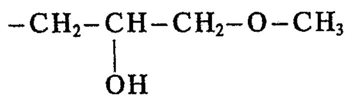 | desgl. | scharlach | |
| 7 | $-CH_2-CH=CH_2$ | $-CH_2-CH=CH_2$ | desgl. | scharlach | |
| 8 | $-C_2H_5$ | 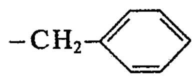 | desgl. | scharlach | |
| 9 | $-H$ | 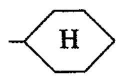 | desgl. | scharlach | |
| 10 | $-H$ | desgl. | 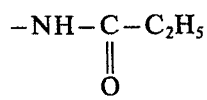 | scharlach | |
| 11 | $-CH_2-CH=CH_2$ | $-CH_2-CH=CH_2$ | desgl. | scharlach | |
| 12 | $-C_2H_5$ | $-C_2H_5$ | desgl. | scharlach | |
| 13 | $-C_2H_5$ | $-C_2H_5$ | 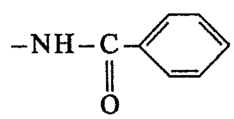 | scharlach | |
| 14 | $-C_2H_5$ | $-C_2H_5$ | 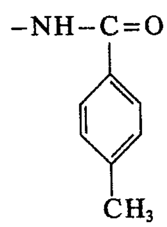 | scharlach | |
| 15 | $-C_2H_5$ | $-C_2H_5$ | 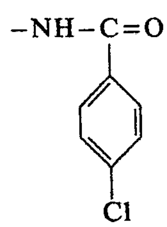 | scharlach | |
| 16 | $-C_2H_5$ | $-C_2H_5$ | 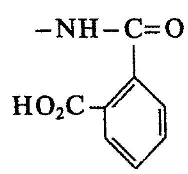 | scharlach | |
| 17 | $-C_2H_5$ | $-C_2H_5$ | $-NH-SO_2-CH_3$ | scharlach | |
| 18 | $-C_2H_5$ | 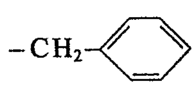 | $-NH-SO_2-CH_3$ | scharlach | |

Fortsetzung

| Beispiel | $R_1$ | $R_2$ | $R_3$ | Farbton auf Polyamid | Farbton auf Wolle |
|---|---|---|---|---|---|
| 19 | $-C_2H_5$ | $-C_2H_5$ | 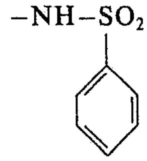 | scharlach | |
| 20 | $-C_2H_5$ | $-C_2H_5$ | 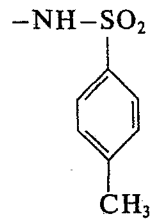 | scharlach | |
| 21 | $-H$ | $-H$ | $-NH-CO-NH_2$ | rotstichig orange | |
| 22 | $-CH_3$ | $-CH_3$ | $-NH-CO-NH_2$ | rotstichig orange | |
| 23 | $-CH_2-CH=CH_2$ | $-CH_2-CH=CH_2$ | $-NH-CO-NH_2$ | rotstichig orange | |
| 24 | $-C_2H_5$ | $-CH_2-CH_2-SO_3H$ | 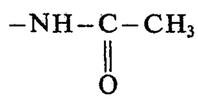 | | scharlach |
| 25 | $-C_2H_5$ | 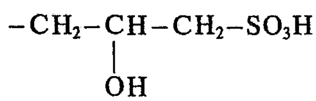 | desgl. | | scharlach |
| 26 | $-C_2H_5$ | 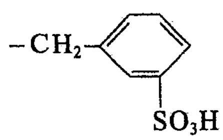 | desgl. | | scharlach |

Beispiel 7

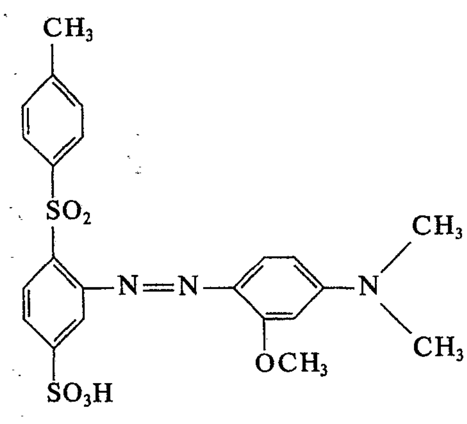

Es werden 13,2 g 2-Amino-4'-methyl-diphenylsulfon-4-sulfonsäure (49,6%ig) in 150 ml Wasser und 14 ml 4n $\alpha$-Naphthalinsulfonsäure suspendiert, und in diese Mischung läßt man bei 10 bis 20° 5 ml 4n Nitritlösung im Laufe einer Stunde eintropfen. Die entstandene Suspension wird noch eine Stunde

lang gerührt, dann wird ein geringer Überschuß an Nitrit mit Sulfaminsäure zerstört. Nun wird eine Lösung von 4 g 3-Methoxy-N,N-dimethylanilin in 25 ml Aceton hergestellt, und die obige Diazosuspension wird in die Acetonlösung eingegossen. Der pH-Wert der Mischung wird mit 9 ml 2N Natronlauge im Laufe von 30 Minuten auf pH=6 angehoben und dann konstant gehalten. Nach 12stündigem Rühren bei 25° wird der Farbstoff duch Zusatz von 5 ml 10N Salzsäure ausgefällt und abfiltriert. Zur Reinigung wird der Filterrückstand in 300 ml Wasser und 55 ml 2n Natronlauge bei pH=12 gelöst, dann wird klärfiltriert, und das Filtrat wird mit 50 ml 2n Salzsäure auf den pH-Wert 5 eingestellt. Die entstandene Suspension wird nach einer Stunde filtriert, und der Filterrückstand wird mit 100 ml 5%iger Kochsalzlösung gewaschen. Nach Trocknen im Vakuum bei 70 bis 80° werden 3,7 g eines braunen Pulvers erhalten. Der Farbstoff gibt, aus schwach saurem Bad gefärbt, auf Polyamidmaterial brillante orange-rote Färbungen.

Wenn man wie im Beispiel 7 angegeben verfährt, jedoch eine Kupplungskomponente der Formel

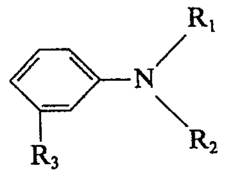

einsetzt, wobei $R_1$, $R_2$ und $R_3$ die in den Spalten 2 bis 4 der folgenden Tabelle 3 angegebenen Bedeutungen haben, so erhält man ebenfalls wertvolle wasserlösliche Farbstoffe, die Polyamid- oder Wollmaterial in den in der letzten Spalte angegebenen Tönen färben. Die Farbstoffe haben ein gutes Aufbauvermögen und gute Echtheitseigenschaften.

Tabelle 3

| Beispiel | $R_1$ | $R_2$ | $R_3$ | Farbton auf | |
|---|---|---|---|---|---|
| | | | | Polyamid | Wolle |
| 1 | $-C_2H_5$ | $-C_2H_5$ | $-O-CH_3$ | orange | |
| 2 | $-C_2H_5$ | $-CH_2-CH_2-OH$ | $-O-CH_3$ | orange | |
| 3 | $-CH_2-CH_2-CN$ | $-CH_2-CH_2-CN$ | $-O-CH_3$ | rotstichig gelb | |
| 4 | $-CH_2-CH=CH_2$ | $-CH_2-CH=CH_2$ | $-O-CH_3$ | orange | |
| 5 | $-CH_3$ | $-CH_2-$ 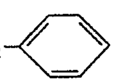 | $-O-CH_3$ | orange | |
| 6 | $-H$ | 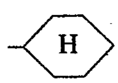 | $-O-CH_3$ | orange | |
| 7 | $-CH_3$ | desgl. | $-O-CH_3$ | orange | |
| 8 | $-CH_2-CH_2-OH$ | $-CH_2-CH_2-OH$ | $-O-C_2H_5$ | orange | |
| 9 | $C_2H_5$ | $-C_2H_5$ | $-O-C_2H_5$ | orange | |
| 10 | $C_2H_5$ | $-CH_2-CH_2-OH$ | $-O-CH_2-CH_2-OH$ | orange | |
| 11 | $C_2H_5$ | $-CH_2-CH_2-CN$ | $-O-CH_2-CH_2-OH$ | gelbstichig orange | |
| 12 | $C_2H_5$ | $-CH_2-$ 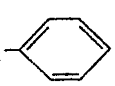 | $-O-CH_2-CH_2-OH$ | orange | |
| 13 | $-CH_3$ | $-CH_3$ | $-O-CH_2-CH_2-OH$ | orange | |

Fortsetzung

| Beispiel | $R_1$ | $R_2$ | $R_3$ | Farbton auf Polyamid | Farbton auf Wolle |
|---|---|---|---|---|---|
| 14 | $-CH_3$ | $-CH_3$ | $-O-CH_2-CH-CH_3$<br>\|<br>OH | orange | |
| 15 | $-CH_2-CH_2-OH$ | $-CH_2-CH_2-OH$ | $-O-CH_2-CH-CH_3$<br>\|<br>OH | orange | |
| 16 | $-CH_2-CH=CH_2$ | $-CH_2-CH=CH_2$ | desgl. | orange | |
| 17 | $-CH_3$ | $-CH_3$ | $-O-CH_2-CH-C_2H_5$<br>\|<br>OH | orange | |
| 18 | $-CH_3$ | $-CH_3$ | $-O-CH_2-CH-OH$<br>\|<br>$CH_2$<br>\|<br>O<br>\|<br>$CH_3$ | orange | |
| 19 | $-C_2H_5$ | $-CH_2-CH_2-SO_3H$ | $-O-CH_3$ | | orange |
| 20 | $-C_2H_5$ | $-CH_2-CH-CH_2-SO_3H$<br>\|<br>OH | $-O-CH_3$ | | orange |
| 21 | $-C_2H_5$ | $-CH_2-CH_2-O-SO_3H$ | $-O-CH_3$ | | orange |
| 22 | $-C_2H_5$ | $-CH_2-$ 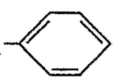 | $-O-CH_3$ | | orange |

Beispiel 8

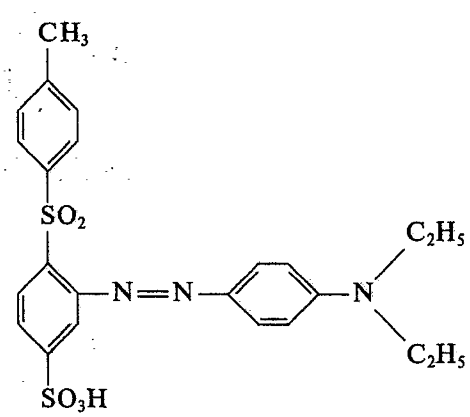

7,62 g 2-Amino-4'-methyl-diphenylsulfon-4-sulfonsäure werden bei pH 8 in 40 ml Wasser von 55° in Lösung gebracht. Nach Zugabe von 5 ml 10N Salzsäure und Eis wird bei einer Temperatur von 5 bis 8° mit 5 ml 4N Natriumnitrit diazotiert. Nach 20 Minuten zerstört man einen schwachen Nitritüberschuß. Nun läßt man 2,98 g N,N-Diäthylanilin hinzutropfen und erhöht den pH-Wert allmählich von 5 auf 7,5.

Bei Raumtemperatur wird das ausgefallene Produkt abfiltriert und nach dem Waschen mit 2,5%iger Kochsalzlösung bei 100 bis 110° getrocknet.

Man erhält 9,74 g eines Farbstoffes, welcher Polyamidmaterialien in brillanten orangen Tönen färbt.

Färbevorschrift I

Man färbt 10 Teile Trikot aus Helanca® in 500 Teilen einer wäßrigen Flotte, die 2 g/l Ammonacetat enthält und mit Essigsäure auf pH 5 gestellt wird. Der Anteil an Farbstoff von Beispiel 1 oder 5 beträgt 1%, bezogen auf das Fasergewicht. Die Färbedauer bei einer Temperatur von 98° beträgt 30 bis 90 Minuten. Das gefärbte Helancastück wird anschließend herausgenommen und wie üblich gespült und getrocknet. Man erhält ein völlig egal gefärbtes Gewebestück, das eine reine Nuance und gute Gesamtechtheiten und keinerlei materialbedingte Streifigkeit aufweist.

Färbevorschrift II

Man färbt 10 Teile Trikot aus Helanca® in 500 Teilen einer wäßrigen Flotte, die 1 g/l Mononatriumphosphat enthält und mit Dinatriumphosphat auf pH 6 gestellt wird. Der Anteil an Farbstoff von Tabelle 1, Beispiel 4 oder Tabelle 2, Beispiel 13 beträgt 2,2%, bezogen auf das Fasergewicht. Die Färbedauer bei einer Temperatur von 98° beträgt 30 bis 90 Minuten. Das gefärbte Helancastück wird anschließend herausgenommen und wie üblich gespült und getrocknet. Man erhält ein tief gefärbtes Gewebestück und das reine Nuance, gute Gesamtechtheiten und insbesondere gute Naßechtheiten aufweist.

Färbevorschrift III (Teppichausziehfärbeverfahren)

Ein Baumfärbeapparat (Labor-Stückfärbeapparat, Modell 10 der Firma Rudolf Then) besteht in seinen Hauptteilen aus dem liegenden Färbekessel mit Kühlmantel, der mit dem Nebenkessel mit seiner Spezial-Umkehrpumpe zu einem Zirkulationssystem verbunden ist.

In diesen Färbeapparat wird ein Warenbaum eingeführt, der mit einer Polyamid-6 Schlingenflor-Teppichware von 50 cm Breite, 135 cm Länge und einem Gewicht von 380 g bestückt wurde. In den Nebenkessel wurden 6 Liter enthärtetes Wasser eingefüllt und 60 ml 2n Natronlauge zugegeben. Durch Öffnen der entsprechenden Ventile (Nebenkessel bzw. Verbindungsleitungen, Pumpe/Färbekessel) strömt die Flotte aus dem Nebenkessel mit eigenem Gefälle in den Färbekessel, dabei fließt die verdrängte Luft durch die Entlüftungsleitung in den Nebenkessel ab. Nach Füllung des Färbeapparates bleibt im Nebenkessel ein Flottenrest von ca. 5 cm Höhe, danach wird die Umwälzpumpe eingeschaltet. Zur Kontrolle des pH-Wertes wurde in die Rohrleitung zwischen Färbe- und Nebenkessel (Fließrichtung) eine Bohrung angebracht und eine kombinierte Glaselektrode eingeführt. Die Färbeflotte zirkuliert während des gesamten Färbeprozesses von innen nach außen, dabei beträgt das Druckgefälle 0,1 bis 0,2 Bar, die Förderleistung der Pumpe ca. 6 Liter pro Minute. Die Flotte wird auf 98° erhitzt und 7,6 g eines anionischen faseraffinen Egalisiermittels, gelöst in 100 ml Wasser, innerhalb von 5 Minuten in den Nebenkessel zugegeben.

Die Färbetemperatur wird auf 97 bis 98° eingestellt, der pH-Wert beträgt 10,7. Der pH-Wert einer entnommenen, auf 20° abgekühlten Probe beträgt 11,9.

Nun werden 2,5 g des gelben Farbstoffes von Beispiel 1 und 1,8 g des blauen Farbstoffes der Formel

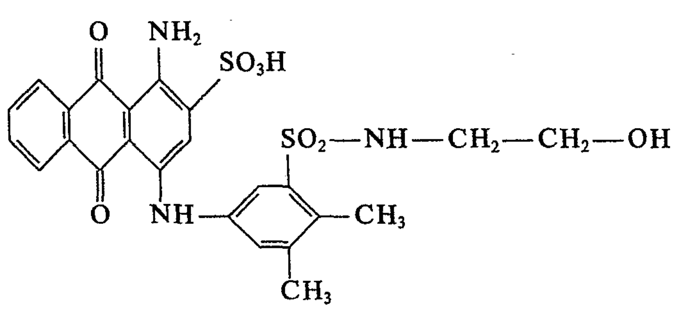

beide gelöst in 200 ml heißem Wasser, innerhalb von 10 Minuten aus einem Tropftrichter in den Nebenkessel zulaufen gelassen. Nach 30 Minuten werden mittels einer Kolbenbürette während 10 Minuten mit einer Geschwindigkeit von 5,5 ml pro Minute und während weiteren 20 Minuten mit einer Geschwindigkeit von 2,25 ml pro Minute, insgesamt 100 ml 1n Schwefelsäure zudosiert.

Der pH-Wert beträgt nach weiteren 10 Minuten 3,8. Das Färbebad ist erschöpft, d. h. die Farbstoffe sind zu über 99% auf das Färbegut ausgezogen. Die Beheizung wird abgestellt und mit Hilfe der indirekten Kühlung der Färbeflotte auf 60° gekühlt. Während dieser Zeit erhöht sich der pH-Wert auf

3,9. Die fast wasserklare Flotte wird in den Nebenkessel zurückgepumpt und der Warenbaum herausgenommen. Das Teppichmaterial wird abgewickelt, zentrifugiert und getrocknet. Die Polyamid-6-Schlingen-Teppichware ist flächenegal grün gefärbt.

Färbevorschrift IV (Teppichdruck)

Ein Velours-Teppichboden aus Polyamid-6 mit einem Gewicht von 350 bis 400 g/m² wird mit einer Klotzflotte, bestehend aus 988 Teilen Wasser, 10 Teilen Natronlauge 36° Bé und 2 Teilen Netzmittel, auf einem Foulard imprägniert und auf eine Flottenaufnahme von 80% abgequetscht.

Auf den so vorbehandelten Teppich wird mittels einer Düse eine Farbpaste der folgenden Zusammensetzung in Form eines Musters aufgespritzt:

942 Teile Wasser,
50 Teile Verdicker,
3 Teile Antischaummittel,
3 Teile des gelben Farbstoffes von Beispiel 1,
1 Teil des roten Farbstoffes von Beispiel 5, sowie
1 Teil des blauen Farbstoffes der Formel

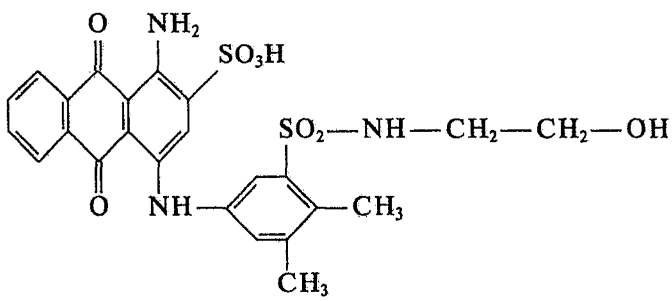

Der verwendete Verdicker weist die folgende Zusammensetzung auf:

240 Teile Lackbenzin,
50 Teile Wasser-in-Öl-Emulgator,
20 Teile Öl-in-Wasser-Emulgator,
20 Teile Antischaummittel,
50 Teile vernetztes Carboxyvinylpolymer mit einem Molekulargewicht von ca. 4 000 000,
70 Teile lineares Carboxyvinylpolymer mit einem Molekulargewicht von ca. 1 000 000, und
550 Teile Wasser, dessen pH-Wert mit Essigsäure auf 4,5 gestellt wurde.

Das mit der Farbpaste bespritzte Material wird anschließend während 5 Minuten mit Sattdampf von 101° behandelt zur Fixierung der Farbstoffe, gespült, neutralisiert, erneut gespült und getrocknet.

Man erhält einen Velour-Teppichboden mit einem braunen Muster mit sehr scharfen Konturen, welcher eine sehr gute Penetration und keinerlei »Frosting« aufweist.

Färbevorschrift V (Teppich-Kontinue-Färbung)

3,32 Teile des gelben Farbstoffes von Beispiel 1 und
11,2 Teile des blauen Farbstoffes der Formel

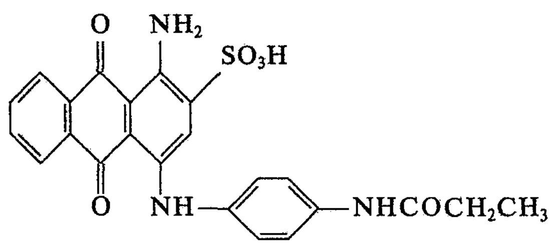

werden in 100 Teilen Wasser durch kurzes Kochen gelöst. Diese Lösung wird hierauf zu einer Lösung, enthaltend 3 Teile eines Verdickungsmittels auf der Basis von Johannisbrotkernmehl, 5,0 Teile eines koazervatbildenden Klotzhilfsmittels auf der Basis eines Kondensationsproduktes einer höher molekularen Fettsäure mit einem Oxyalkylamin, 2,0 Teile krist. Mononatriumphosphat und 1,0 Teile krist.

Dinatriumphosphat in 500 Teilen kaltem Wasser zugegeben. Anschließend wird mit kaltem Wasser auf 1000 Teile aufgefüllt. Von dieser, einen pH-Wert von 5,5 bis 6,5 aufweisenden Flotte werden 300%, bezogen auf das Teppichgewicht, auf einen Nylon-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100° behandelt wird.

Nach dem Waschen in eine Breitwaschmaschine erhält man einen gleichmäßig grün gefärbten Teppich.

Färbevorschrift VI (Woll-Kontinue-Färbung)

Ein Wollstoff wird mit einer Flotte, enthaltend 2,6 Teile des gelben Farbstoffes von Beispiel 1, 5,2 Teile des roten Farbstoffes der Formel

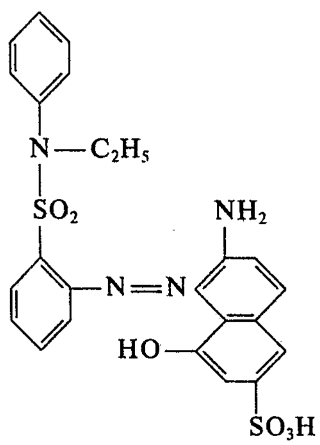

15,7 Teile des blauen Farbstoffes der in Färbevorschrift V angegebenen Formel, 2,0 Teile eines Verdikkungsmittels auf der Basis von Alginat, 22,0 Teile eines koazervatbildenden Klotzmittels auf der Basis eines Kondensationsproduktes einer höher molekularen Fettsäure mit einem Oxyalkylamin und 8,0 Teile 80%ige Ameisensäure in 1000 Teilen Wasser foulardiert, wobei eine Flottenaufnahme von 85%, bezogen auf das Gewicht von Wolle, erreicht wird. Anschließend dämpft man während 15 Minuten in Sattdampf von 98 bis 100° und wäscht. Man erhält eine gleichmäßige Olivfärbung.

Färbevorschrift VII (Automatisierte Färbung)

Man stellt eine konzentrierte Stammflotte her, welche 24 Teile des Farbstoffes von Beispiel 5, 10 Teile des blauen Farbstoffes der in Färbevorschrift V angegebenen Formel, 50 Teile eines Egalisiermittels auf der Basis von dodecylbenzolsulfonsaurem Natrium und hochsulfoniertem Ricinusöl und 50 Teile 60%ige Essigsäure in 1000 Teilen Wasser gelöst enthält. Diese wird hierauf in eine Färbeapparatur für automatisiertes Färben gebracht und dabei für jeden Färbezyklus automatisch auf das 100fache (oder je nach Wunsch z. B. auf das 50- oder 200fache) verdünnt.

In den Färbekammern dieser Apparatur werden hierauf Nylon-Rohlinge (z. B. Herrensocken), welche auf flache Formen aufgezogen sind, mit der erhaltenen verdünnten Lösung gleichmäßig bespritzt. Die abgelaufene Flotte wird dabei am Boden der Färbekammern aufgefangen und im Kreislauf wieder aufgespritzt. Nach Ablauf von 8 Minuten Färbezeit bei einer Flottentemperatur von 95°, während der pro Wareneinheit (z. B. Herrensocken) 1,2 Liter Flotte im Kreislauf sind, wird die Flotte abgelassen und die Ware mit heißem Wasser gespült. Die Ware wird hierauf mit 3 Dampfstößen mit überhitztem Dampf von 115°, zwischen denen jeweils entlüftet und evakuiert wird, auf die Form fixiert und getrocknet.

**Patentansprüche**

1. Monoazofarbstoffe der Formel

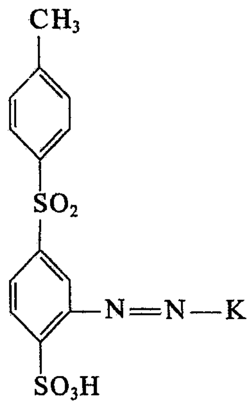

(1)

worin K einen Rest der Formel

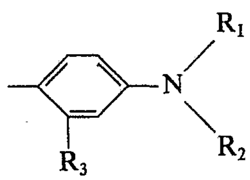

(2)

oder der Formel

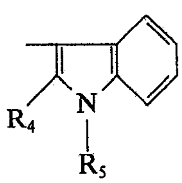

(3)

bedeutet, worin $R_1$ und $R_2$ unabhängig voneinander Wasserstoff, $C_{1-4}$-Alkyl, das durch Halogen, Cyan, Hydroxy, Carboxy, Sulfo, Sulfato, $C_{1-4}$-Alkoxy, $C_{1-4}$-Alkoxycarbonyl, $C_{1-4}$-Alkanoyloxy, Phenyl, Sulfophenyl und Naphthyl substituiert sein kann, Cyclohexyl, $C_{1-4}$-Alkenyl, das durch Halogen substituiert sein kann, Phenyl oder Naphthyl ist, oder worin $R_1$ und $R_2$ zusammen mit dem sie verbindenden Stickstoffatom, gegebenenfalls unter Einschluß eines weiteren Heteroatoms, einen heterocyclischen 5- oder 6-Ring bilden, $R_3$ Wasserstoff, $C_{1-4}$-Alkyl, $C_{1-4}$-Alkoxy, das durch Hydroxy und $C_{1-4}$-Alkoxy substituiert sein kann, $C_{1-4}$-Alkanoylamino, Benzoylamino, das im Benzolkern durch Methyl, Äthyl, Methoxy, Äthoxy, Chlor, Carboxy und Sulfo substituiert sein kann, Ureido, $C_{1-4}$-Alkylsulfonylamino, Phenylsulfonylamino, das im Benzolkern durch Methyl, Äthyl, Methoxy, Äthoxy, Chlor, Carboxy und Sulfo substituiert sein kann, oder Naphthylsulfonylamino, $R_4$ Methyl oder Phenyl und $R_5$ Wasserstoff oder $C_{1-8}$-Alkyl ist, wobei falls K der Rest der Formel (2) ist, $R_3$ nicht Wasserstoff sein darf, wenn $R_1$ oder $R_2$ Benzyl ist.

2. Monoazofarbstoffe gemäß Anspruch 1, worin K den Rest der Formel (2) bedeutet, worin $R_1$ und $R_2$ unabhängig voneinander Wasserstoff, $C_{1-4}$-Alkyl, das durch Cyan, Hydroxy, Sulfo, Sulfato, $C_{1-4}$-Alkoxy, $C_{1-4}$-Alkoxycarbonyl, $C_{1-4}$-Alkanoyloxy, Phenyl oder Sulfophenyl substituiert sein kann, Cyclohexyl oder $C_{1-4}$-Alkenyl, das durch Halogen substituiert sein kann, ist, oder worin $R_1$ und $R_2$ zusammen mit dem sie verbindenden Stickstoffatom einen Morpholinring bilden, $R_3$ Wasserstoff, $C_{1-4}$-Alkyl, $C_{1-4}$-Alkoxy, das durch Hydroxy und $C_{1-4}$-Alkoxy substituiert sein kann, $C_{1-4}$-Alkanoylamino, Benzoylamino, das im Benzolkern durch Methyl, Chlor, und Carboxy substituiert sein kann, Ureido, $C_{1-4}$-Alkylsulfonylamino oder Phenylsulfonylamino, das im Benzolkern durch Methyl substituiert sein kann, ist, wobei $R_3$ nicht Wasserstoff sein darf, wenn $R_1$ oder $R_2$ Benzyl ist.

3. Monoazofarbstoffe gemäß Anspruch 1, worin K den Rest der Formel (3) bedeutet, worin $R_4$ Methyl oder Phenyl und $R_5$ Wasserstoff, Methyl oder Octyl ist.

4. Monoazofarbstoffe gemäß Anspruch 2, worin K den Rest der Formel (2) bedeutet, worin $R_1$ und $R_2$ unabhängig voneinander Wasserstoff, Methyl, Äthyl, $\beta$-Hydroxyäthyl, $\beta$-Cyanäthyl, $\beta$-Sulfoäthyl, $\beta$-Sulfatoäthyl, $\gamma$-Sulfopropyl, $\beta$-Hydroxy-$\gamma$-sulfopropyl, Propenyl, $\gamma$-Chlorpropenyl, $\beta$-Hydroxybutyl, $\beta$-Hydroxy-$\gamma$-methoxypropyl, $\beta$-Acetoxyäthyl, $\beta$-Methoxycarbonyläthyl, $\beta$-Propionyloxyäthyl, Cyclohexyl, Benzyl oder Sulfobenzyl ist, oder worin $R_1$ und $R_2$ zusammen mit dem sie verbindenden Stickstoffatom

einen Morpholinring bilden, und $R_3$ Methyl, Äthyl, Methoxy, Äthoxy, $\beta$-Hydroxyäthoxy, $\beta$-Hydroxypropyloxy, $\beta$-Hydroxy-$\gamma$-methoxypropyloxy, $\beta$-Hydroxybutyloxy, Acetylamino, Propionylamino, Benzoylamino, Methylbenzoylamino, Chlorbenzoylamino, Carboxybenzoylamino, Methylsulfonylamino, Phenylsulfonylamino, Methylphenylsulfonylamino oder Ureido ist.

5. Der Monoazofarbstoff gemäß Anspruch 3, der Formel

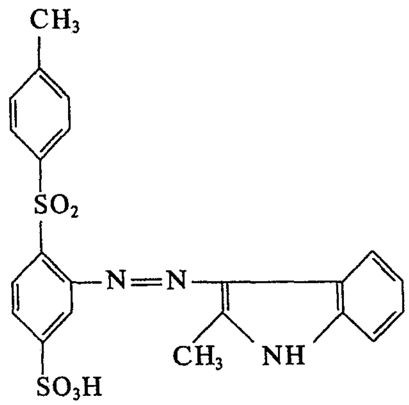

(4)

6. Der Monoazofarbstoff gemäß Anspruch 4, der Formel

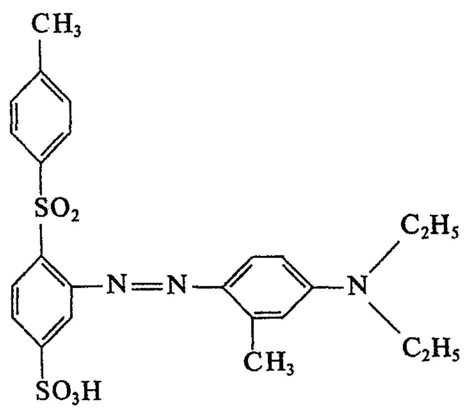

(5)

7. Der Monoazofarbstoff gemäß Anspruch 2, der Formel

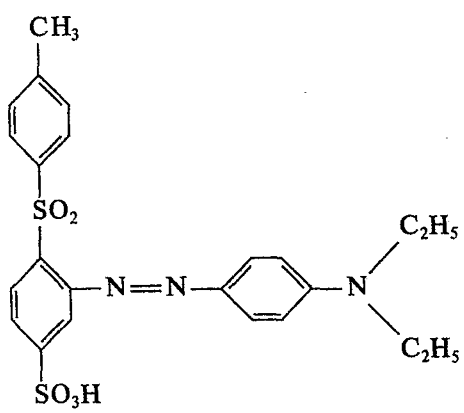

(5a)

8. Der Monoazofarbstoff gemäß Anspruch 4, der Formel

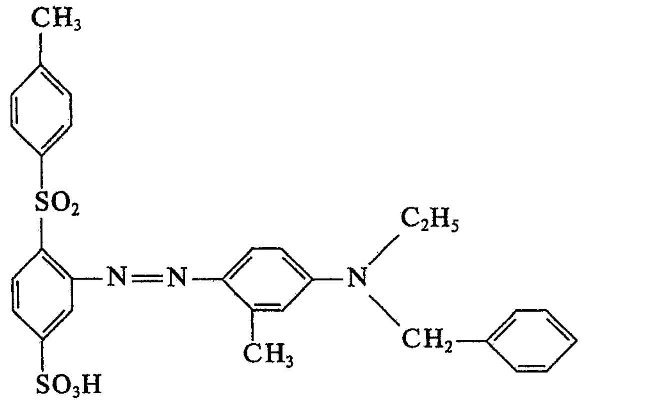

(6)

9. Der Monoazofarbstoff gemäß Anspruch 4, der Formel

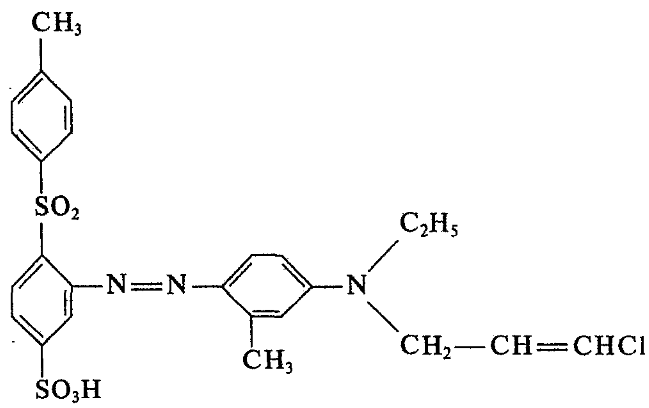

(6a)

10. Verfahren zur Herstellung von Monoazofarbstoffen gemäß Anspruch 1, dadurch gekennzeichnet, daß man eine Diazokomponente der Formel

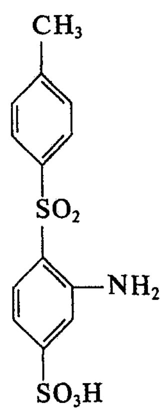

(7)

diazotiert und auf eine Kupplungskomponente der Formel

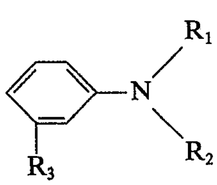

(8)

oder der Formel

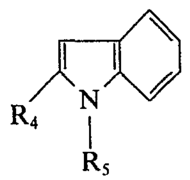

(9)

worin $R_1$, $R_2$, $R_3$, $R_4$ und $R_5$ die unter Formel (1) angegebenen Bedeutungen haben, kuppelt.

11. Verfahren gemäß Anspruch 10, dadurch gekennzeichnet, daß man eine Kupplungskomponente der Formel (8) verwendet, worin $R_1$ und $R_2$ unabhängig voneinander Wasserstoff, $C_{1-4}$-Alkyl, das durch Cyan, Hydroxy, Sulfo, Sulfato, $C_{1-4}$-Alkoxy, $C_{1-4}$-Alkoxycarbonyl, $C_{1-4}$-Alkanoyloxy, Phenyl oder Sulfophenyl substituiert sein kann, Cyclohexyl oder $C_{1-4}$-Alkenyl, das durch Halogen substituiert sein kann, ist, oder worin $R_1$ und $R_2$ zusammen mit dem sie verbindenden Stickstoffatom einen Morpholinring bilden, $R_3$ Wasserstoff, $C_{1-4}$-Alkyl, $C_{1-4}$-Alkoxy, das durch Hydroxy und $C_{1-4}$-Alkoxy substituiert sein kann, $C_{1-4}$-Alkanoylamino, Benzoylamino, das im Benzolkern durch Methyl, Chlor, und Carboxy substituiert sein kann, Ureido, $C_{1-4}$-Alkylsulfonylamino oder Phenylsulfonylamino, das im Benzolkern durch Methyl substituiert sein kann, ist, wobei $R_3$ nicht Wasserstoff sein darf, wenn $R_1$ oder $R_2$ Benzyl ist.

12. Verfahren gemäß Anspruch 10, dadurch gekennzeichnet, daß man eine Kupplungskomponente der Formel (9) verwendet, worin $R_4$ Methyl oder Phenyl und $R_5$ Wasserstoff, Methyl oder Octyl ist.

13. Verfahren gemäß Anspruch 11, dadurch gekennzeichnet, daß man eine Kupplungskomponente der Formel (8) verwendet, worin $R_1$ und $R_2$ unabhängig voneinander Wasserstoff, Methyl, Äthyl, $\beta$-Hydroxyäthyl, $\beta$-Cyanäthyl, $\beta$-Sulfoäthyl, $\beta$-Sulfatoäthyl, $\gamma$-Sulfopropyl, $\beta$-Hydroxy-$\gamma$-sulfopropyl, Propenyl, $\gamma$-Chlorpropenyl, $\beta$-Hydroxybutyl, $\beta$-Hydroxy-$\gamma$-methoxypropyl, $\beta$-Acetoxyäthyl, $\beta$-Methoxycarbonyläthyl, $\beta$-Propionyloxyäthyl, Cyclohexyl, Benzyl oder Sulfobenzyl ist, oder worin $R_1$ und $R_2$ zusammen mit dem sie verbindenden Stickstoffatom einen Morpholinring bilden, und $R_3$ Methyl, Äthyl, Methoxy, Äthoxy, $\beta$-Hydroxyäthoxy, $\beta$-Hydroxypropyloxy, $\beta$-Hydroxy-$\gamma$-methoxypropyloxy, $\beta$-Hydroxybutyloxy, Acetylamino, Propionylamino, Benzoylamino, Methylbenzoylamino, Chlorbenzoylamino, Carboxybenzoylamino, Methylsulfonylamino, Phenylsulfonylamino, Methylphenylsulfonylamino oder Ureido ist.

14. Verfahren gemäß Anspruch 12, zur Herstellung des Monoazofarbstoffes der Formel (4), dadurch gekennzeichnet, daß man 2-Amino-4'-methyl-diphenylsulfon-4-sulfonsäure diazotiert und auf 2-Methylindol kuppelt.

15. Verfahren gemäß Anspruch 13, zur Herstellung des Monoazofarbstoffes der Formel (5), dadurch gekennzeichnet, daß man 2-Amino-4'-methyl-diphenylsulfon-4-sulfonsäure diazotiert und auf N,N-Diäthyl-m-toluidin kuppelt.

16. Verfahren gemäß Anspruch 11, zur Herstellung des Monoazofarbstoffes der Formel (5a), dadurch gekennzeichnet, daß man 2-Amino-4'-methyl-diphenylsulfon-4-sulfonsäure diazotiert und auf N,N-Diäthylanilin kuppelt.

17. Verfahren gemäß Anspruch 13, zur Herstellung des Monoazofarbstoffes der Formel (6), dadurch gekennzeichnet, daß man 2-Amino-4'-methyl-diphenylsulfon-4-sulfonsäure diazotiert und auf N-Äthyl-N-benzyl-m-toluidin kuppelt.

18. Verfahren gemäß Anspruch 13, zur Herstellung des Monoazofarbstoffes der Formel (6a), dadurch gekennzeichnet, daß man 2-Amino-4'-methyl-diphenylsulfon-4-sulfonsäure diazotiert und auf N-Äthyl-N-$\gamma$-chlorpropenyl-3-methylanilin kuppelt.

19. Verwendung der Azofarbstoffe gemäß den Ansprüchen 1 bis 9 bzw. der gemäß den Ansprüchen 10 bis 18 erhaltenen Azofarbstoffe zum Färben und Bedrucken.

20. Verwendung gemäß Anspruch 19 zum Färben von Polyamidfasern.

21. Das gemäß den Ansprüchen 19 und 20 erhaltene gefärbte und bedruckte Material, insbesondere Textilmaterial.

22. Färbe- und Druckpräparate, die Azofarbstoffe gemäß den Ansprüchen 1 bis 9 enthalten.

**Claims**

1. A monoazo dye of the formula

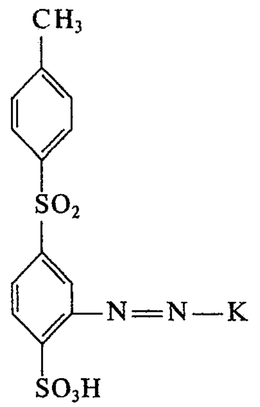

(1)

in which K is a radical of the formula

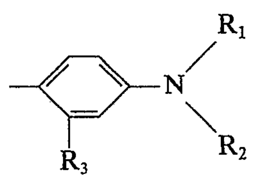

(2)

or of the formula

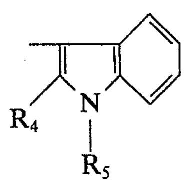

(3)

wherein $R_1$ and $R_2$ are each independently hydrogen, $C_{1-4}$alkyl which can be substituted by halogen, cyano, hydroxyl, carboxyl, sulfo, sulfato, $C_{1-4}$alkoxy, $C_{1-4}$alkoxycarbonyl, $C_1$—$C_4$alkanoyloxy, phenyl, sulfophenyl and naphthyl, or are cyclohexyl, or $C_{1-4}$alkenyl which can be substituted by halogen, or are phenyl or naphthyl, or wherein $R_1$ and $R_2$, together with the nitrogen atom to which they are attached, and optionally including a further hetero-atom, form a 5- or 6-membered heterocyclic ring; $R_3$ is hydrogen, $C_{1-4}$alkyl, $C_{1-4}$alkoxy which can be substituted by hydroxyl and $C_{1-4}$alkoxy, or is $C_{1-4}$alkanoylamino, or benzoylamino which can be substituted in the benzene nucleus by methyl, ethyl, methoxy, ethoxy, chlorine, carboxyl and sulfo, or is ureido, $C_{1-4}$alkylsulfonylamino, or phenylsulfonylamino which can be substituted in the benzene nucleus by methyl, ethyl, methoxy, ethoxy, chlorine, carboxyl and sulfo, or is naphthylsulfonylamino; $R_4$ is methyl or phenyl and $R_5$ is hydrogen or $C_{1-8}$alkyl, with the proviso that if K is the radical of the formula (2), $R_3$ may not be hydrogen if $R_1$ or $R_2$ is benzyl.

2. A monoazo dye according to claim 1, wherein K is the radical of the formula (2), wherein $R_1$ and $R_2$ are each independently hydrogen, $C_{1-4}$alkyl which can be substituted by cyano, hydroxyl, sulfo, sulfato, $C_{1-4}$alkoxy, $C_{1-4}$alkoxycarbonyl, $C_{1-4}$alkanoyloxy, phenyl or sulfophenyl or are cyclohexyl, or $C_{1-4}$alkenyl which can be substituted by halogen, or wherein $R_1$ and $R_2$, together with the nitrogen atom to which they are attached, form a morpholine ring, and $R_3$ is hydrogen, $C_{1-4}$alkyl, $C_{1-4}$alkoxy which can be substituted by hydroxyl and $C_{1-4}$alkoxy, or is $C_{1-4}$alkanoylamino, or benzoylamino which can be sustituted in the benzene nucleus by methyl, chlorine and carboxyl, or is ureido, $C_{1-4}$alkylsulfonylamino, or phenylsulfonylamino which can be substituted in the benzene nucleus by methyl, with the proviso that $R_3$ may not be hydrogen if $R_1$ or $R_2$ is benzyl.

3. A monoazo dye according to claim 1, wherein K is the radical of the formula (3), wherein $R_4$ is methyl or phenyl and $R_5$ is hydrogen, methyl or octyl.

4. A monoazo dye according to claim 2, wherein K is radical of the formula (2), wherein $R_1$ and $R_2$ are each independently hydrogen, methyl, ethyl, $\beta$-hydroxyethyl, $\beta$-cyanoethyl, $\beta$-sulfoethyl, $\beta$-sulfatoethyl, $\gamma$-sulfopropyl, $\beta$-hydroxy-$\gamma$-sulfopropyl, propenyl, $\gamma$-chloropropenyl, $\beta$-hydroxybutyl, $\beta$-hydroxy-$\gamma$-methoxypropyl, $\beta$-acetoxyethyl, $\beta$-methoxycarbonylethyl, $\beta$-propionyloxyethyl, cyclohexyl, benzyl or sulfobenzyl, or wherein $R_1$ and $R_2$, together with the nitrogen atom to which they are attached, form a

morpholine ring, and $R_3$ is methyl, ethyl, methoxy, ethoxy, β-hydroxyethoxy, β-hydroxypropoxy, β-hydroxy-γ-methoxypropoxy, β-hydroxybutoxy, acetylamino, propionylamino, benzoylamino, methylbenzoylamino, chlorobenzoylamino, carboxybenzoylamino, methylsulfonylamino, phenylsulfonylamino, methylphenylsulfonylamino or ureido.

5. The monoazo dye according to claim 3, of the formula

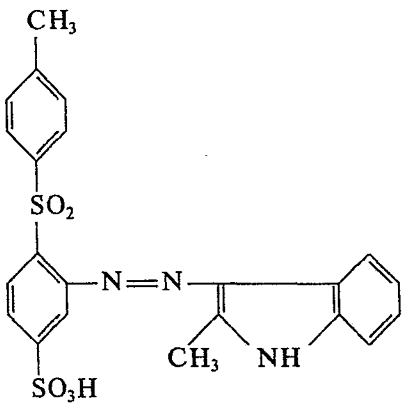

(4)

6. The monoazo dye according to claim 4, of the formula

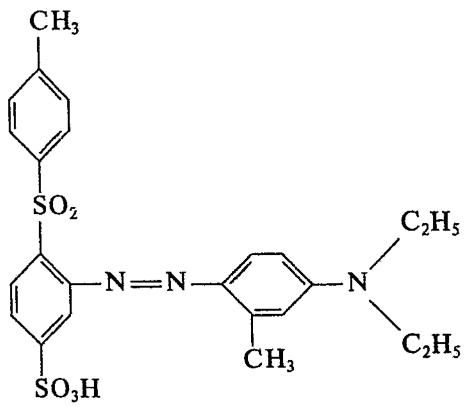

(5)

7. The monoazo dye according to claim 2, of the formula

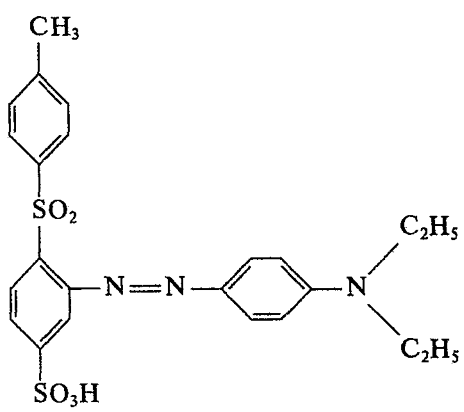

(5a)

8. The monoazo dye according to claim 4, of the formula

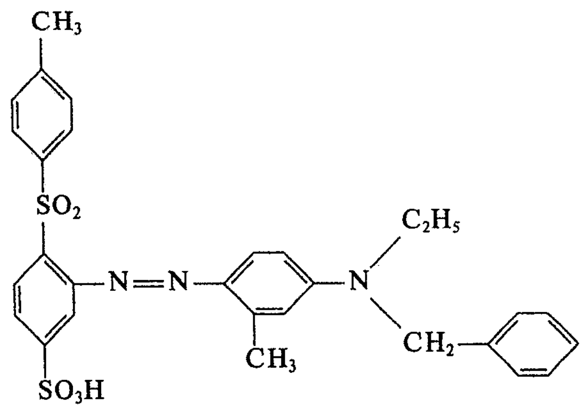

(6)

9. The monoazo dye according to claim 4, of the formula

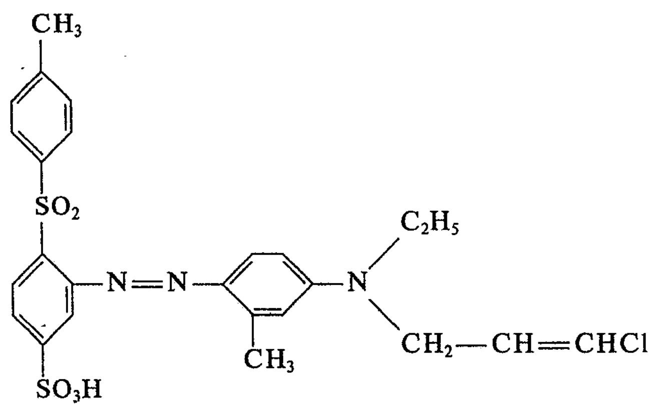

(6a)

10. A process for the preparation of a monoazo dye according to claim 1, which comprises diazotising a diazo component of the formula

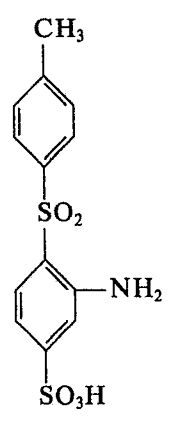

(7)

and coupling the product to a coupling component of the formula

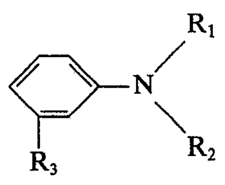

(8)

or of the formula

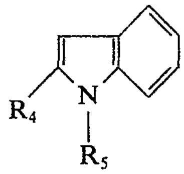

(9)

in which $R_1$, $R_2$, $R_3$, $R_4$ and $R_5$ are as defined for formula (1).

11. A process according to claim 10, which comprises the use of a coupling component of the formula (8), wherein $R_1$ and $R_2$ are each independently hydrogen, $C_{1-4}$alkyl which can be substituted by cyano, hydroxyl, sulfo, sulfato, $C_{1-4}$alkoxy, $C_{1-4}$alkoxycarbonyl, $C_{1-4}$alkanoyloxy, phenyl or sulfophenyl, or are cyclohexyl, or $C_{1-4}$alkenyl which can be substituted by halogen, or wherein $R_1$ and $R_2$, together with the nitrogen atom to which they are attached, form a morpholine ring, and $R_3$ is hydrogen, $C_{1-4}$alkyl, $C_{1-4}$alkoxy which can be substituted by hydroxyl and $C_{1-4}$alkoxy, or is $C_{1-4}$alkanoylamino, or benzoylamino which can be substituted in the benzene nucleus by methyl, chlorine, and carboxyl, or is ureido, $C_{1-4}$alkylsulfonylamino, or phenylsulfonylamino which can be substituted in the benzene nucleus by methyl, with the proviso that $R_3$ may not be hydrogen if $R_1$ or $R_2$ is benzyl.

12. A process according to claim 10, which comprises the use of a coupling component of the formula (9), wherein $R_4$ is methyl or phenyl and $R_5$ is hydrogen, methyl or octyl.

13. A process according to claim 11, which comprises the use of a coupling component of the formula (8), wherein $R_1$ and $R_2$ are each independently hydrogen, methyl, ethyl, $\beta$-hydroxyethyl, $\beta$-cyanoethyl, $\beta$-sulfoethyl, $\beta$-sulfatoethyl, $\gamma$-sulfopropyl, $\beta$-hydroxy-$\gamma$-sulfopropyl, propenyl, $\gamma$-chloropropenyl, $\beta$-hydroxybutyl, $\beta$-hydroxy-$\gamma$-methoxypropyl, $\beta$-acetoxyethyl, $\beta$-methoxycarbonylethyl, $\beta$-propionyloxyethyl, cyclohexyl, benzyl or sulfobenzyl, or wherein $R_1$ and $R_2$, together with the nitrogen atom to which they are attached, form a morpholine ring, and $R_3$ is methyl, ethyl, methoxy, ethoxy, $\beta$-hydroxyethoxy, $\beta$-hydroxypropoxy, $\beta$-hydroxy-$\gamma$-methoxypropoxy, $\beta$-hydroxybutoxy, acetylamino, propionylamino, benzoylamino, methylbenzoylamino, chlorobenzoylamino, carboxybenzoylamino, methylsulfonylamino, phenylsulfonylamino, methylphenylsulfonylamino or ureido.

14. A process according to claim 12 for the preparation of the monoazo dye of the formula (4), which comprises diazotising 2-amino-4'-methyl-diphenylsulfone-4-sulfonic acid and coupling the product to 2-methylindole.

15. A process according to claim 13 for the preparation of the monoazo dye of the formula (4), which comprises diazotising 2-amino-4'-methyl-diphenylsulfone-4-sulfonic acid and coupling the product to N,N-diethyl-m-toluidine.

16. A process according to claim 11 for the preparation of the monoazo dye of the formula (5a), which comprises diazotising 2-amino-4'-methyl-diphenylsulfone-4-sulfonic acid and coupling the product to N,N-diethylaniline.

17. A process according to claim 13 for the preparation of the monoazo dye of the formula (6), which comprises diazotising 2-amino-4'-methyl-diphenylsulfone-4-sulfonic acid and coupling the product to N-ethyl-N-benzyl-m-toluidine.

18. A process according to claim 13 for the preparation of the monoazo dye of the formula (6a), which comprises diazotising 2-amino-4'-methyl-diphenylsulfone-4-sulfonic acid and coupling the product to N-ethyl-N-$\gamma$-chloropropenyl-3-methylaniline.

19. The use of an azo dye according to any one of claims 1 to 0 or of an azo dye obtained according to any one of claims 10 to 18 for dyeing and printing.

20. The use according to claim 19 for dyeing polyamide fibres.

21. The dyed and printed material, in particular textile material, obtained according to either of claims 19 or 20.

22. A dyeing or printing composition which contains an azo dye according to any one of claims 1 to 9.

**Revendications**

1. Colorants monoazoïques de formule

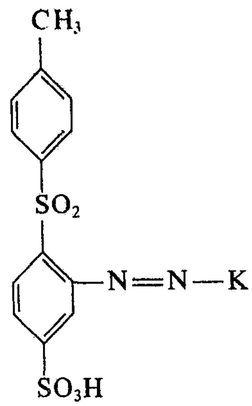

(1)

dans laquelle K est un reste de formule

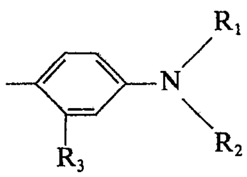

(2)

ou de formule

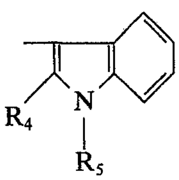

(3)

dans lesquelles $R_1$ et $R_2$ sont, indépendamment l'un de l'autre, de l'hydrogène, alcoyle $C_{1-4}$ qui peut être substitué par halogène, cyan, hydroxy, carboxy, sulfo, sulfato, alcoxy $C_{1-4}$, alcoxycarbonyle $C_{1-4}$, alcanoyloxy $C_{1-4}$, phényle, sulfophényle et naphthyle; du cyclohexyle, alkényle $C_{1-4}$, qui peut être substitué par halogène; du phényle ou du naphthyle, ou bien, dans lesquelles $R_1$ et $R_2$ forment ensemble avec l'atome d'azote qui les relie, le cas échéant avec incorporation d'un autre hétéroatome, un noyau hétérocyclique à 5 ou 6 éléments, $R_3$ est de l'hydrogène, alcoyle $C_{1-4}$, alcoxy $C_{1-4}$ qui peut être substitué par hydroxy et alcoxy $C_{1-4}$; alcoylamino $C_{1-4}$, benzoylamino, qui peut être substitué dans le noyau benzène par du méthyle, de l'éthyle, méthoxy, éthoxy, du chlore, carboxy et sulfo; uréido, un alkylsulfonylamino $C_{1-4}$, un phénylsulfonylamino, qui peut être substitué dans le noyau benzène par du méthyle, de l'éthyle, méthoxy, éthoxy, du chlore, carboxy et sulfo, ou bien naphthylsulfonylamino, $R_4$ est du méthyle ou du phényle et $R_5$ est de l'hydrogène ou alcoyle $C_{1-8}$, et dans le cas où K est le reste de formule (2) $R_3$ ne doit pas être de l'hydrogène, lorsque $R_1$ ou $R_2$ est du benzyle.

2. Colorants monoazoïques selon la revendication 1, où K signifie le reste de formule (2), dans laquelle $R_1$ et $R_2$ sont, indépendamment de l'autre, de l'hydrogène, alcoyle $C_{1-4}$, qui peut être substitué par cyan, hydroxy, sulfo, sulfato, alcoxy $C_{1-4}$, alcoxycarbonyle $C_{1-4}$, alcanoyloxy $C_{1-4}$, phényle ou sulfophényle; du cyclohexyle ou alkényle $C_{1-4}$, qui peut être substitué par halogène, ou bien dans laquelle $R_1$ et $R_2$ avec l'atome d'azote qui les relie forment un noyau morpholino, $R_3$ est de l'hydrogène, alcoyle $C_{1-4}$, alcoxy $C_{1-4}$, qui peut être substitué par hydroxy et alcoxy $C_{1-4}$; alcanoylamino $C_{1-4}$, benzoylamino qui peut être substitué dans le noyau benzène par du méthyle, chlore et carboxy; uréido, alkylsulfonylamino $C_{1-4}$ ou bien phénylsulfonylamino qui peut être sustitué, dans le noyau benzène, par du méthyle, $R_3$ ne devant pas être de l'hydrogène lorsque $R_1$ ou $R_2$ est du benzyle.

3. Colorants monoazoïques selon la revendication 1, où K signifie le reste de formule (3), où $R_4$ est du méthyle ou du phényle et $R_5$ est de l'hydrogène, du méthyle ou de l'octyle.

4. Colorants monoazoïques selon la revendication 2, où K signifie le reste deformule (2), dans laquelle $R_1$ et $R_2$ sont, indépendamment l'un de l'autre, de l'hydrogène, du méthyle, de l'éthyle, du $\beta$-hydroxy-éthyle, du $\beta$-cyanoéthyle, du $\beta$-sulfoéthyle, du $\beta$-sulfatoéthyle, du $\gamma$-sulfopropyle, du $\beta$-hydroxy-$\gamma$-sulfopropyle, du propényle, du $\gamma$-chloropropényle, du $\beta$-hydroxybutyle, du $\beta$-hydroxy-$\gamma$-méthoxypropyle, du $\beta$-acétoxyéthyle, du $\beta$-méthoxycarbonyléthyle, du $\beta$-propionyloxyéthyle, du cyclohe-

xyle, du benzyle ou du sulfobenzyle, ou bien dans laquelle $R_1$ et $R_2$ forment avec l'atome d'azote qui les relie, un noyau morpholino, et $R_3$ est du méthyle, de l'éthyle, méthoxy, éthoxy, β-hydroxyéthoxy, β-hydroxypropyloxy, β-hydroxy-γ-méthoxypropyloxy, β-hydroxybutyloxy, acétylamino, propionylamino, benzoylamino, méthylbenzoylamino, chlorobenzoylamino, carboxybenzoylamino, méthylsulfonylamino, phénylsulfonylamino, méthylphénylsulfonylamino ou bien un uréido.

5. Colorant monoazoïque selon la revendication 3, de formule

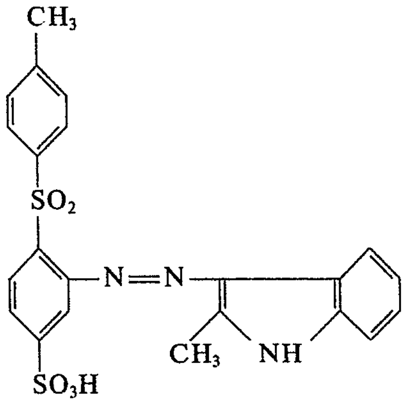

(4)

6. Colorant monoazoïque selon la revendication 4, de formule

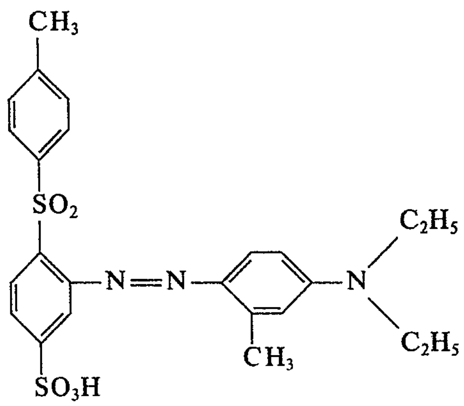

(5)

7. Colorant monoazoïque selon la revendication 2, de formule

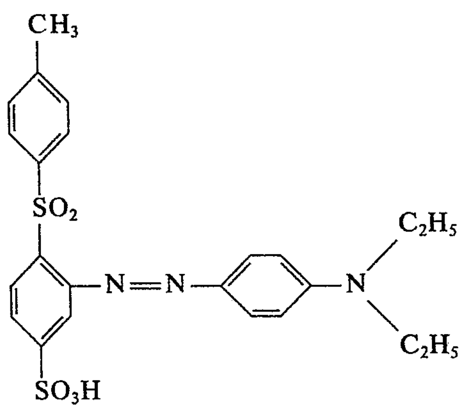

(5a)

8. Colorant monoazoïque selon la revendication 4, de formule

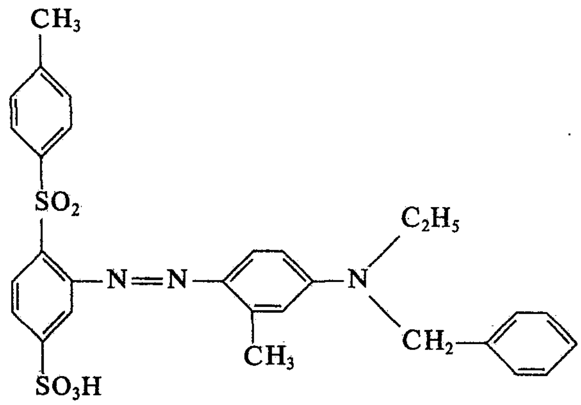

(6)

9. Colorant monoazoïque selon la revendication 4, de formule

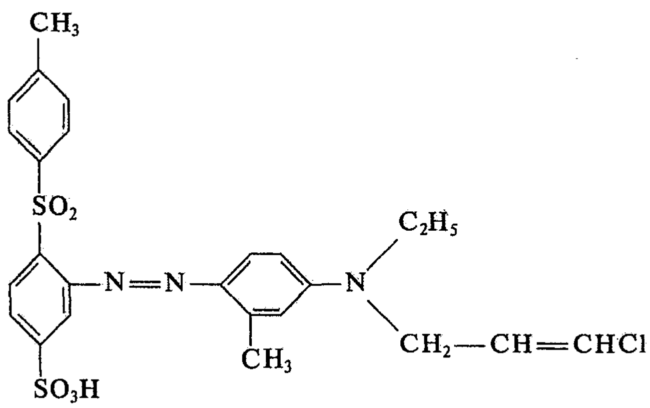

(6a)

10. Procédé de production de colorants monoazoïques selon la revendication 1, caractérisé en ce que l'on diazote un composé diazo de formule

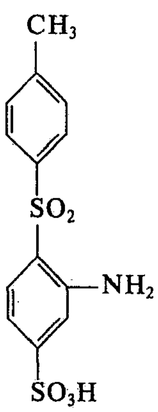

(7)

et on le copule à un composant de copulation de formule

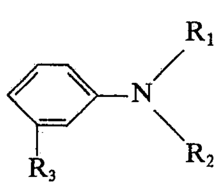

(8)

ou de formule

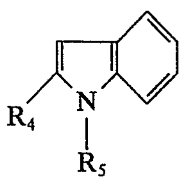

(9)

dans lesquelles $R_1$, $R_2$, $R_3$, $R_4$ et $R_5$ ont les significations données pour la formule (1).

11. Procédé selon la revendication 10, caractérisé en ce qu'on utilise un composant de copulation de formule (8), où $R_1$ et $R_2$ sont indépendamment l'un de l'autre de l'hydrogène, alcoyle $C_{1-4}$ qui peut être substitué par cyan, hydroxy, sulfo, sulfato, alcoxy $C_{1-4}$, alcoxycarbonyle $C_{1-4}$, alcanoyloxy $C_{1-4}$, phényle ou sulfophényle; du cyclohexyle ou alkényle $C_{1-4}$ qui peut être substitué par halogène, ou bien dans laquelle $R_1$ et $R_2$ forment avec l'atome d'azote qui les relie, un noyau morpholino, $R_3$ est de l'hydrogène, alcoyle $C_{1-4}$, alcoxy $C_{1-4}$, qui peut être substitué par hydroxy et alcoxy $C_{1-4}$; alcanoylamino $C_{1-4}$, benzoylamino qui peut être substitué dans le noyau benzène par du méthyle, du chlore, ou carboxy, uréido, alkylsulfonylamino $C_{1-4}$ phénylsulfonylamino qui peut être substitué, dans le noyau benzène, par du méthyle, où $R_3$ ne peut être de l'hydrogène lorsque $R_1$ ou $R_2$ est du benzyle.

12. Procédé selon la revendication 10, caractérisé en ce que l'on utilise un composant de formule (9) où $R_4$ est du méthyle ou du phényle et $R_5$ est de l'hydrogène, du méthyle ou de l'octyle.

13. Procédé selon la revendication 11, caractérisé en ce qu'on utilise un composant de formule (8), où $R_1$ et $R_2$ sont, indépendamment l'un de l'autre, de l'hydrogène, du méthyle, de l'éthyle, du $\beta$-hydroxyéthyle, du $\beta$-cyanoéthyle, du $\beta$-sulfoéthyle, du $\beta$-sulfatoéthyle, du $\gamma$-sulfopropyle, du $\beta$-hydroxy-$\gamma$-sulfopropyle, du propényle, du $\gamma$-chloropropényle, du $\beta$-hydroxybutyle, du $\beta$-hydroxy-$\gamma$-méthoxypropyle, du $\beta$-acétoxyéthyle, du $\beta$-méthoxycarbonyléthyle, du $\beta$-propionyloxyéthyle, du cyclohexyle, du benzyle ou du sulfobenzyle, ou bien où $R_1$ et $R_2$ forment, avec l'atome d'azote qui les relie, un noyau morpholino, e $R_3$ est du méthyle, de l'éthyle, méthoxy, éthoxy, $\beta$-hydroxyéthoxy, $\beta$-hydroxypropyloxy, $\beta$-hydroxy-$\gamma$-méthoxypropyloxy, $\beta$-hydroxybutyloxy, acétylamino, propionylamino, benzoylamino, méthylbenzoylamino, chlorobenzoylamino, carboxybenzoylamino, méthylsulfonylamino, phénylsulfonylamino, méthylphénylsulfonylamino ou uréido.

14. Procédé selon la revendication 12 pour la fabrication du colorant monoazoïque de formule (4), caractérisé en ce que l'on diazote de l'acide 2-amino-4'-méthyl-diphénylsulfon-4-sulfonique et on le copule à du 2-méthylindole.

15. Procédé selon la revendication 13 pour la production du colorant monoazoïque de formule (5), caractérisé en ce que l'on diazote de l'acide 2-amino-4'-méthyl-diphenylsulfon-4-sulfonique et on le copule à de la N,N-diéthyl-m-toluidine.

16. Procédé selon la revendication 11 pour la production du colorant monoazoïque de formule (5a), caractérisé en ce que l'on diazote de l'acide 2-amino-4'-méthyl-diphénylsulfon-4-sulfonique et on le copule à de la N,N-diéthylaniline.

17. Procédé selon la revendication 13 pour la production du colorant monoazoïque de formule (6), caractérisé en ce que l'on diazote de l'acide 2-amino-4'-méthyl-diphénylsulfon-4-sulfonique et on le copule à de la N-éthyl-N-benzyl-m-toluidine.

18. Procédé selon la revendication 13 pour la production du colorant monoazoïque de formule (6a), caractérisé en ce que l'on diazote de l'acide 2-amino-4'-méthyl-diphénylsulfon-4-sulfonique et on le copule à de la N-éthyl-N-$\gamma$-chloropropényl-3-méthylaniline.

19. Utilisation des colorants azoïques selon les revendications 1 à 9 ou des colorants azoïques obtenus selon les revendication 10 à 18 pour la teinture et l'impression.

20. Utilisation selon la revendication 19 pour la teinture de fibres de polyamide.

21. Matériau teint et imprimé obtenu selon les revendications 19 et 20, en particulier du matériau textile.

22. Préparations de teinture et d'impression qui contiennent les colorants azoïques selon les revendications 1 à 9.